(19) Europäisches Patentamt
European Patent Office
Office européen des brevets

(11) **EP 1 694 049 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
***H04N 1/028*** *(2006.01)*

(21) Anmeldenummer: **06001006.3**

(22) Anmeldetag: **18.01.2006**

(54) **Farbmessgerät und zugehöriger Messkopf**

Colour measuring device and corresponding measuring head

Colorimètre et tête de mesure associée

(84) Benannte Vertragsstaaten:
**CH DE FR GB IT LI**

(30) Priorität: **16.02.2005 CH 2642005**
**28.02.2005 CH 3392005**

(43) Veröffentlichungstag der Anmeldung:
**23.08.2006 Patentblatt 2006/34**

(73) Patentinhaber: **X-Rite Europe GmbH**
**8105 Regensdorf (CH)**

(72) Erfinder:
• **Frick, Beat**
**8107 Buchs (CH)**
• **von Orelli, Adrian**
**8008 Zürich (CH)**

(74) Vertreter: **Muschke, Markus Artur Heinz**
**Patentanwälte Schwabe, Sandmair, Marx**
**Stuntzstrasse 16**
**81677 München (DE)**

(56) Entgegenhaltungen:
**EP-A- 0 764 836**       **EP-A- 1 314 972**
**US-A1- 2002 122 192**

• **ZWINKELS J C: "Colour-measuring instruments and their calibration" DISPLAYS, ELSEVIER SCIENCE PUBLISHERS BV., BARKING, GB, Bd. 16, Nr. 4, Mai 1996 (1996-05), Seiten 163-171, XP004032518 ISSN: 0141-9382**
• **"Standard Practice for Obtaining Spectrometric Data for Object-Color Evaluation" ASTM DESIGNATION, ASTM INTERNATIOANL, US, Bd. 1164-2, 10. Juni 2002 (2002-06-10), Seiten 1-8, XP009022950**

**Beschreibung**

Die Erfindung betrifft einen Messkopf für ein Farbmessgerät gemäss dem Oberbegriff des unabhängigen Anspruchs 1 sowie ein mit einem solchen Messkopf ausgestattetes Farbmessgerät gemäss dem Oberbegriff des unabhängigen Anspruchs 30.

Konkreter befasst sich die vorliegende Erfindung mit Verbesserungen diverser Detailaspekte eines zum Einbau in farbtaugliche Reproduktionsgeräte, insbesondere Farbdrucker, geeigneten Farbmessgeräts, im Speziellen Spektralfotometers der z.B. in der EP-A 1 507 134 (entsprechend US-Patentanmeldung Ser.No. 10/894797 vom 20.07.2004) beschriebenen Art.

Zur Charakterisierung, Tintenlimitierung, Linearisierung und Profilierung von Tintenstrahlfarbdruckern werden Farbtafeln (sog. Test Charts) ausgedruckt und nachher mit einem manuellen oder automatischen Farbmessgerät ausgemessen. Als Farbmessgeräte kommen dabei Spektrometer mit 45°/0°-Geometrie zur Anwendung, die verwendeten Daten sind typischerweise L\*a\*b\* oder spektrale Remissionen im Bereich von 380 nm bis 730 nm. Geeignete Farbmessgeräte sind beispielsweise die Geräte "Spectrolino" und "i1" der Firma Gretag-Macbeth AG, Regensdorf, Schweiz.

Tintenlimitierung und Linearisierung sind typischerweise in der Software des Druckers enthalten, wobei gewisse Drucker z.B. der Firmen Hewlett-Packard und Xerox auch schon Einbausensoren mit Densitometerfunktionen zur automatischen Linearisierung enthalten.

ICC Profile werden bekannterweise mittels einer Color Management Software (z.B. "Profile Maker" der Firma Logo GmbH) aufgrund der Messdaten der Farbtafeln erstellt.

Tintenlimitierung, Linearisierung und Profilierung sind von verschiedenen Einflussfaktoren abhängig, z.B. Zustand des Druckkopfs, Papiertyp und Papier Batch, Tintentyp und Tinten Batch, Druck-Modus, Drucker-Registrierung, Umgebungsbedingungen wie Temperatur und Feuchtigkeit. Für die Tintenlimitierung und Linearisierung werden üblicherweise voreingestellte Parameter verwendet. Die sich aus der Streuung von Medien Batches und den Umgebungsbedingungen ergebenden Abweichungen vom Soll werden vom Profil kompensiert. Generische und voreingestellte Profile für alle möglichen Kombinationen von Medien und Druck-Moden genügen jedoch nicht oder zumindest nicht immer, weshalb in der Praxis bei höheren Qualitätsanforderungen manuell zusätzlich lokale Profile erzeugt und eingesetzt werden.

Um diese Tätigkeiten zu vereinfachen, wäre es wünschenswert, einen Farbdrucker mit einem eingebauten Messgerät zu versehen, so dass die vollständige Charakterisierung (Tintenlimitierung, Linearisierung, Profilierung) für alle Medien (Tinten, Papier) ohne zusätzliche Hilfsgeräte und manuelle Messvorgänge erfolgen kann.

Ein für diesen Einsatz geeignetes Messgerät muss sehr hohen Anforderungen genügen. Neben den üblichen Anforderungen bezüglich genormter Messgeometrie, Spektralbereich, Genauigkeit und Konstanz (Repetierbarkeit der Messergebnisse) muss es spektrale Daten, farbmetrische Daten und genormte oder spezifische Farbdichte-Daten liefern können. Diese Anforderungen sind mit den derzeit kommerziell erhältlichen Spektralfotometern, z.B. den eingangs erwähnten Geräten "Spectrolino" und "i1 " der Firma Gretag-Macbeth AG durchaus zu erfüllen. Darüberhinaus bestehen aber bei einem Einbaugerät noch Einschränkungen bezüglich der Einbaumasse (kompakte Form) und ggf. des Gewichts. Ferner bestehen erhöhte Ansprüche bezüglich Umgebungsbedingungen (Temperatur, Feuchtigkeit) und Verschmutzungsgefahr in der Umgebung des Druckwerks (Staub, Farbnebel etc.). Ferner kann die Messung nicht in direktem körperlichen Kontakt mit dem Medium erfolgen, weil z.B. bei Tintenstrahldruckern der Druck noch eine gewisse Zeit feucht und mechanisch empfindlich ist. Ein Einbaugerät muss auch unempfindlich gegenüber mechanischen Erschütterungen sein und langlebige Lichtquellen aufweisen. Da der Abstand zum Messobjekt wegen des unzulässigen direkten körperlichen Kontakts mit dem Messgerät Schwankungen unterworfen ist, muss das Messgerät auch damit umgehen können.

Schliesslich spielen noch Service-Freundlichkeit und kommerzielle Kriterien eine wesentliche Rolle, da solche Messgeräte in grossen Stückzahlen benötigt werden und deshalb relativ kostengünstig herstellbar sein müssen. Insbesondere ist es dazu erforderlich, dass der Zusammenbau mit geringstem Montage- und Justieraufwand erfolgen kann.

Das in der EP-A 1 507 134 (entsprechend US-Patentanmeldung Ser.No. 10/894797 vom 20.07.2004) beschriebene Spektralfotometer erfüllt die genannten Anforderungen zwar in hohem Masse, ist jedoch in mancher Hinsicht noch verbesserungsfähig.

Durch die vorliegende Erfindung soll nun ein Farbmessgerät, speziell Spektralfotometer bzw. ein Messkopf für ein Farbmessgerät, speziell Spektralfotometer der gattungsgemässen Art hinsichtlich Leistungsfähigkeit, Präzision, relativer Einfachheit der Herstellung und Vielfalt der Einsatzmöglichkeiten verbessert werden.

Diese der Erfindung zugrundeliegende Aufgabe wird durch den durch die Merkmale des unabhängigen Anspruchs 1 gekennzeichneten erfindungsgemässen Messkopf bzw. das durch die Merkmale des unabhängigen Anspruchs 30 gekennzeichnete erfindungsgemässe Farbmessgerät gelöst.

Vorteilhafte Ausgestaltungen und Weiterbildungen des erfindungsgemässen Messkopfs und des erfindungsgemässen Farbmessgeräts sind Gegenstand der abhängigen Ansprüche.

Im folgenden wird die Erfindung anhand der Zeichnung näher erläutert. Es zeigen:

Fig. 1          einen Längsschnitt durch ein Ausführungsbeispiel des erfindungsgemässen, hier als Spektralfotometer ausgebildeten Farbmessgeräts,

Fig. 2a-b       zwei Ansichten nach der Linie II-II der Fig. 1,

Fig. 3a-b       je eine Ansicht einer praktischen Ausführungsvariante einer Hellreferenzanordnung des Farbmessgeräts in zwei verschiedenen Arbeitspositionen,

Fig. 4          ein Ausführungsbeispiel einer Umlenkanordnung,

Fig. 5a-b       je eine Prinzipskizze zur Erläuterung der Funktionsweise der Umlenkanordnung,

Fig. 6a-b       je eine Prinzipskizze zur Erläuterung einer Variante der Umlenkanordnung,

Fig. 7          die Umlenkanordnung der Figuren 6a-b in Verbindung mit einer Ringbeleuchtungsanordnung,

Fig. 8          eine Ansicht eines Ausführungsbeispiels einer Ringbeleuchtungsanordnung,

Fig. 9          einen Schnitt nach der Linie IX-IX der Fig. 8,

Fig. 10         eine Ansicht der erfindungsrelevanten Komponenten einer Linienabtasteinrichtung,

Fig. 11         eine Ausführungsvariante der Ringbeleuchtungsanordnung nach Fig. 8,

Fig. 12-13      je eine Teilansicht des Farbmessgeräts beim praktischen Einsatz zur Glanzmessung in zwei verschiedenen Positionen der Hellreferenzanordnung,

Fig. 14-15      je eine schematische Darstellung entsprechend den Figuren 12 und 13,

Fig. 16a-d      einen Farbmesskopf in vier typischen Messituationen bei seiner Eichung,

Fig. 17a-d      einen Farbmesskopf in vier typischen Messsituationen im praktischen Messeinsatz,

Fig. 18         ein Schema diverser Funktionseinheiten des Farbmessgeräts,

Fig. 19a-b      zwei Skizzen zur Erläuterung einer Abstandsmessung und

Fig. 20a-c      drei in verschiedenen Situationen bei der Abstandsmessung typischerweise anfallende Messsignalverläufe.

Unter Farbmessgerät wird im folgenden jede Art von Messgerät verstanden, welches durch fotoelektrische Abtastung eine Farbinformation des Messobjekts im weitesten Sinn ermittelt. Dazu gehören Spektralfotometer, Colorimeter, Farbdichtemessgeräte u.s.w.. Obwohl die Erfindung im folgenden am Beispiel eines Spektralfotometers erläutert ist, ist sie in keiner Weise darauf beschränkt.

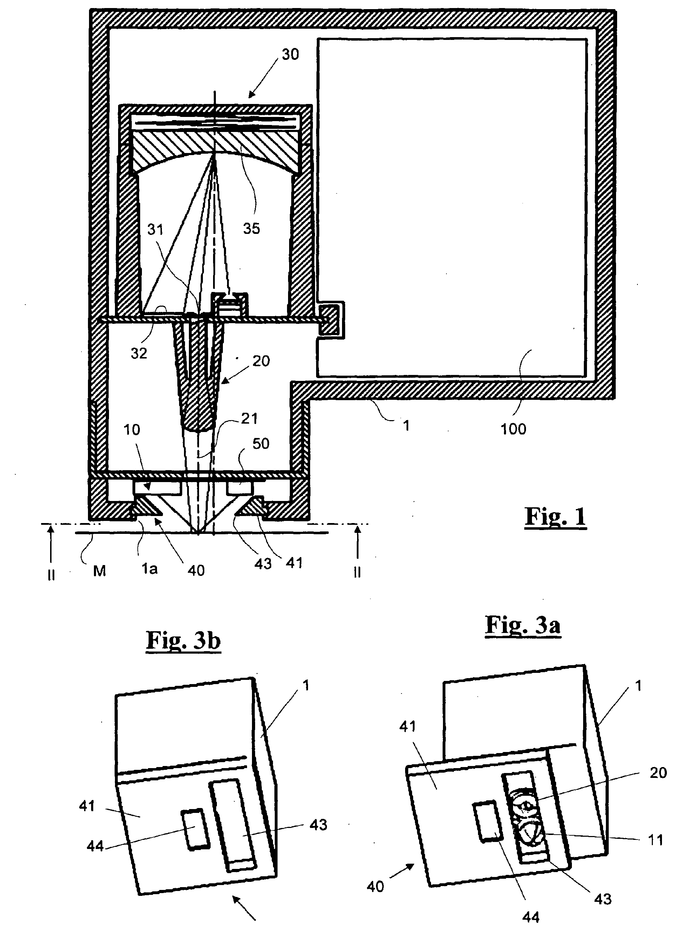

Das in Fig. 1 dargestellte Farbmessgerät ist beispielsweise als Spektralfotometer ausgebildet und umfasst ein Aussengehäuse 1, in welchem alle mechanischen, optischen und elektrischen Komponenten untergebracht sind. Das Gehäuse 1 weist an seinem (in der Zeichnung) unteren Ende eine Öffnung 1 a auf, durch welche hindurch im Betrieb der Messstrahlengang verläuft. Die Öffnung 1a ist ausserhalb des Betriebs durch eine gleichzeitig als Verschluss fungierende Hellreferenzanordnung 40 verschlossen, auf die weiter unten noch im Detail eingegangen wird. Die Messebene, in welcher sich ein zu messendes Messobjekt im praktischen Betrieb befindet, ist mit M bezeichnet. In einigen Figuren ist mit M auch der beleuchtete Messfleck auf dem Messobjekt bezeichnet.

Die Komponenten des Spektralfotometers sind neben der schon erwähnten Hellreferenzanordnung 40 eine Beleuchtungsanordnung 10 zur Beleuchtung des in der Messebene M befindlichen Messobjekts unter einem Einfallswinkel von im wesentlichen 45°, eine Aufpickanordnung 20 zum Auffangen des vom Messobjekt remittierten Messlichts unter einem Ausfallswinkel von im wesentlichen 0° relativ zum Lot auf die Messebene M, eine mit einem konkaven Beugungsgitter 35 ausgestattete Spektrometeranordnung 30 zur spektralen Aufspaltung des von der Aufpickanordnung 20 aufgefangenen und ihr durch einen Eintrittsspalt 31 zugeführten Messlichts, eine innerhalb der Spektrometeranordnung 30 vorgesehene, vom spektral aufgespaltenen Messlicht beaufschlagte fotoelektrische Empfängeranordnung 32 zur Umwandlung der einzelnen Spektralanteile des Messlichts in entsprechende elektrische Signale und eine elektronische Steuerung 100, welche die Beleuchtungsanordnung 10 bzw. die in ihr enthaltene(n) Lichtquelle(n) 11 steuert und aus den von der fotoelektrischen Empfängeranordnung 32 erzeugten elektrischen Signalen in Kombination mit Eich- und Kalibrationsdaten digitale Messwerte (Spektraldaten, Farbdaten, Farbdichtedaten etc.) bildet und an einer nicht dargestellten digitalen Schnittstelle für die weitere Verwendung zur Verfügung stellt. Zur Erfassung des vom Messobjekt direkt reflektierten Lichts (Glanz) ist gegenüber der(n) Lichtquelle(n) 11 ein weiterer mit der elektronischen Steuerung 100 verbundener Fotoempfänger 50 angeordnet, welcher das vom Messobjekt unter einem normgemässen Ausfallswinkel von im wesentlichen 45° reflektierte Messlicht empfängt.

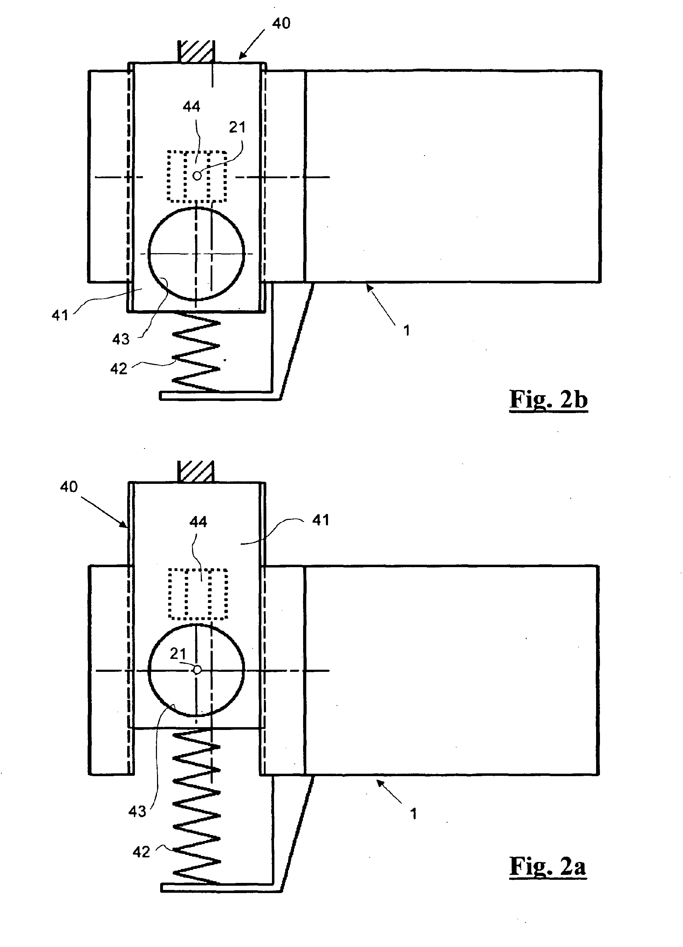

Anstelle der bei Spektralfotometern und anderen Farbmessgeräten sonst üblichen, für die relative Weisskalibrierung benötigten Weisskachel ist die schon genannte Hellreferenzanordnung 40 vorgesehen, welche in einem relativ grossen Abstand von typischerweise etwa 2 mm oberhalb der Messebene M angeordnet ist. Die Hellreferenzanordnung besteht im wesentlichen aus einem Schlitten 41, der in der Öffnung 1a des Aussengehäuses 1 quer zur optischen Achse 21 der Aufpickanordnung 20 zwischen einer Messposition und einer Referenzposition verschiebbar ist, wie dies aus den beiden Figuren 2a (Messposition) und 2b (Referenzposition) ersichtlich ist. Die Verschiebung in die Referenzposition erfolgt beispielsweise durch ein äusseres, hier nicht dargestelltes Antriebsorgan entgegen der Kraft einer Feder 42, welche den Schlitten 41 in Messposition hält bzw. bei Wegfallen der äusseren Krafteinwirkung in die Messposition zurückbewegt. Selbstverständlich kann die Verschiebung des Schlittens 41 auch in beiden Richtungen durch äussere Krafteinwirkung erfolgen, wobei dann die Feder 42 nicht erforderlich wäre.

Der Schlitten 41 ist mit einer Aussparung oder Durchlassöffnung 43 versehen, die ausreichend gross bemessen ist, so dass in Messposition des Schlittens 41 (Fig. 2a) das Beleuchtungslicht und das vom Messobjekt remittierte Messlicht ungehindert passieren können (Fig. 1).

In Bewegungsrichtung bezüglich der Durchlassöffnung 43 versetzt ist auf dem Schlitten 41 eine Umlenkanordnung 44 montiert, welche bei in Referenzposition befindlichem Schlitten 41 im Beleuchtungs- und Aufpickstrahlengang liegt und das Beleuchtungslicht in die Aufpickanordnung 20 führt. Auf die konkrete Ausbildung der Umlenkanordnung wird weiter unten noch im Detail eingegangen.

Bei in Referenzposition befindlichem Schlitten 41 ist das Farbmessgerät bzw. hier speziell Spektralfotometer nach aussen abgeschlossen. Die Hellreferenzanordnung 40 fungiert also gleichzeitig auch als mechanischer und optischer Verschluss (letzterer z.B. für Dunkelmessungen). Ferner bleibt der Freiraum zwischen dem Spektralfotometer und dem Messobjekt erhalten und die Hellreferenzanordnung findet innerhalb des umbauten Raums des Spektralfotometers Platz.

Soweit entspricht das erfindungsgemässe Farbmessgerät bzw. speziell Spektralfotometer in prinzipieller Konzeption und Funktionsweise im wesentlichen dem in der EP-A 1 507 134 (entsprechend US-Patentanmeldung Ser.No. 10/894797 vom 20.07.2004) in allen Einzelheiten beschriebenen Spektralfotometer, so dass der Fachmann diesbezüglich keiner näheren Erläuterung bedarf. Auch Details der elektronischen Steuerung 100 sind in den genannten EP- und US-Patentanmeldungen beschrieben. Die Unterschiede des erfindungsgemässen Farbmessgeräts gegenüber diesem bekannten Stand der Technik liegen im spezifischen Aufbau und der Ausgestaltung einzelner Komponenten, insbesondere der Hellreferenzanordnung 40 und der Beleuchtungsanordnung 10, worauf im folgenden näher eingegangen wird.

In den Figuren 3a und 3b ist eine praktische Realisierungsvariante der Hellreferenzanordnung 40 in Messposition (Fig. 3a) bzw. in Referenzposition (Fig. 3b) des Schlittens 41 gezeigt. In der offenen Messposition der Fig. 3a sind der Linsenkopf der Aufpickanordnung 20 sowie eine Leuchtdiode 11 der Beleuchtungsanordnung zu erkennen. Bei dieser Realisierungsvariante wird der Schlitten 41 in beide Richtungen durch äussere Krafteinwirkung bewegt.

Ein erster wichtiger Aspekt der Erfindung betrifft die Ausgestaltung der Umlenkanordnung 44 in der Hellreferenzanordnung 40.

In der einfachsten Ausführung besteht die Umlenkanordnung 44 aus einem prismatischen Glaskörper mit trapezförmigem Querschnitt, der eine Basisfläche 44a, eine durch die Aussenfläche einer dünnen Streuschicht 44b gebildete Deckfläche 44c, zwei geneigte Seitenflächen 44d und zwei nicht bezeichnete seitliche Begrenzungsflächen aufweist. Die beiden Seitenflächen 44d stehen zur Basisfläche in einem Winkel von 45°. Die Basisfläche 44a ist verspiegelt, die beiden Seitenflächen sind plan geschliffen. Die Streuschicht 44b besteht aus einer dünnen Opalglasschicht. Der ganze Glaskörper ist aus sog. Milchüberfangglas gefertigt, wie es von der Firma Schott AG unter der Bezeichnung Opalika erhältlich ist. Milchüberfangglas ist ein Zweischichtenglas mit einer farblosen (transparenten) Grundschicht und einer damit homogen verbundenen gleichmässig milchig getrübten Überzugschicht. Die Überzugschicht bildet dabei die an der Oberseite des Glaskörpers befindliche Streuschicht 44b.

Der Glaskörper 44 ist mit seiner Basisfläche 44a auf dem Schlitten 41 befestigt, so dass also die Streuschicht 44b dem Linsenkopf der Aufpickanordnung 20 zugewandt ist. Basis- und Deckfläche stehen dabei senkrecht auf die optische Achse 21 der Aufpickanordnung 20 (Fig. 1), die beiden Seitenflächen 44d sind dazu um 45° geneigt.

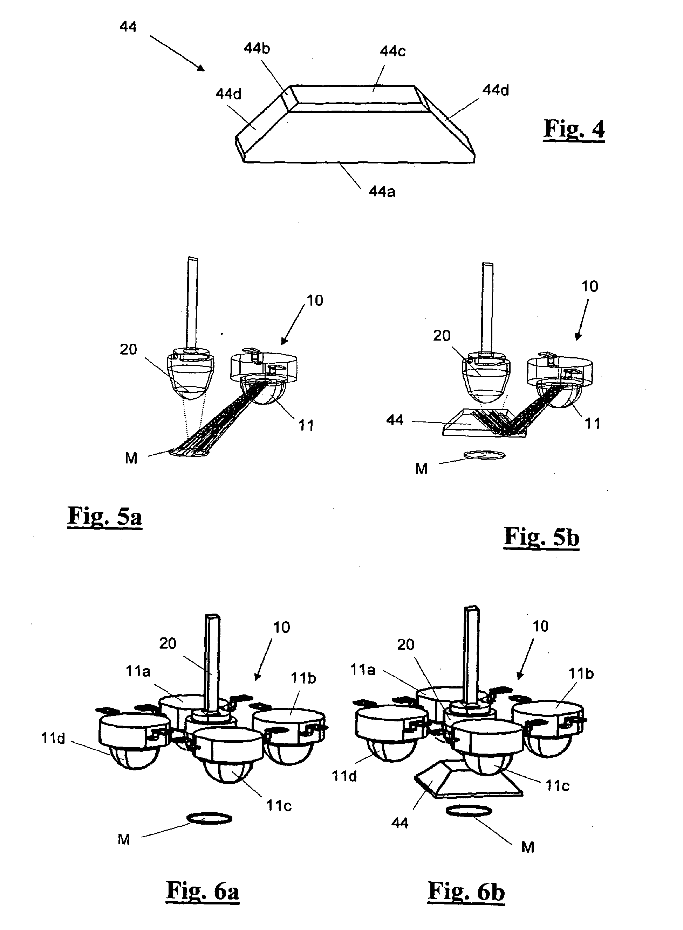

Die Figuren 5a und 5b zeigen den praktischen Einsatz der Umlenkanordnung 44. In Fig. 5a befindet sich der Schlitten in Messposition, wobei das von der hier eine einzige Leuchtdiode 11 umfassenden Beleuchtungsanordnung 10 kommende Licht ungehindert unter 45°+/-5° auf den Messfleck M fällt. Das vom Messfleck remittierte Licht wird von der Aufpickanordnung unter 0°+/-5° aufgefangen und dann der (hier nicht dargestellten) Spektrometeranordnung zugeführt. In Referenzposition des Schlittens befindet sich der Glaskörper der Umlenkanordnung 44 wie in Fig. 5b gezeigt sowohl im Beleuchtungs- als auch im Messstrahlengang, so dass der Messfleck M nicht beleuchtet wird. Beleuchtungslicht tritt senkrecht durch die eine der beiden geneigten Seitenflächen 44d in den Glaskörper ein und wird an dessen Basisfläche 44a in die Streuschicht 44b reflektiert und dort diffus gestreut. Das aus der Streuschicht 44b austretende, diffus gestreute Licht wird von der Aufpickanordnung unter einem Öffnungswinkelbereich von 0°+/-5° aufgefangen und an die Spektrometeranordnung 30 weitergeleitet.

Im Beispiel der Figuren 5a und 5b umfasst die Beleuchtungsanordnung 10 nur eine Lichtquelle 11. Wenn stattdessen zwei gegenüberliegende Lichtquellen vorgesehen sind, dann tritt deren Licht durch je eine der beiden geneigten Seitenflächen 44d in den Glaskörper ein.

Die erfindungsgemässe Umlenkanordnung 44 ist auch leicht an Beleuchtungsanordnungen mit mehreren Lichtquellen anpassbar, wie dies in den Figuren 6a und 6b beispielsweise für vier im Kreis um die Aufpickanordnung 20 angeordnete Lichtquellen in Form von Leuchtdioden 11 a-11 d gezeigt ist. Hier hat die Umlenkanordnung bzw. der Glaskörper 44 die Gestalt eines quadratischen Pyramidenstumpfs mit vier jeweils um 45° zur Basisfläche geneigten Seitenflächen, durch die das Licht von je einer der Lichtquellen in den Glaskörper eintritt. Es versteht sich, dass auch eine Erweiterung auf mehr, beispielsweise etwa sechs bis acht geneigte Lichteintrittsflächen möglich ist. Im Extremfall kann der Glaskörper 44 auch als Kegelstumpf ausgebildet sein, wobei dann sein Mantel eine theoretisch unendliche Anzahl von Lichteintrittsflächen bildet.

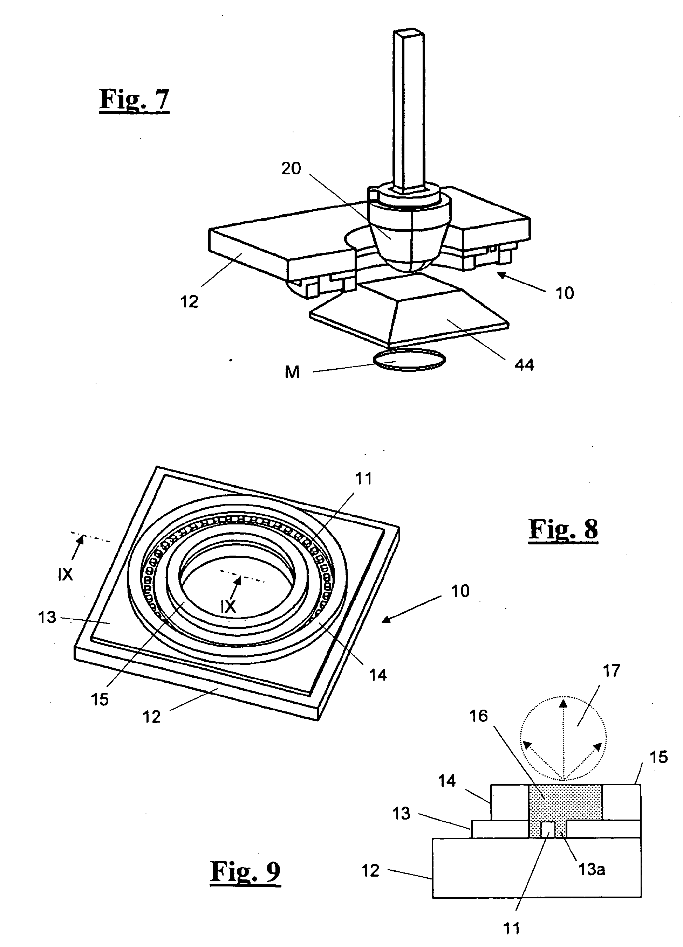

Die Fig. 7 zeigt eine Ausführungsform, bei der die Beleuchtungsanordnung 10 gemäss einer vorteilhaften Weiterbildung der Erfindung als Ringbeleuchtung ausgebildet ist, die die Aufpickanordnung 20 umgibt. Auch in diesem Fall hat der Glaskörper 44 einen quadratischen (oder ev. sechs- oder achteckigen) Grundriss.

Die erfindungsgemässe Ausbildung der Umlenkanordnung 44 als Glaskörper ist in vieler Hinsicht vorteilhaft. Der Glaskörper besteht aus kommerziell erhältlichem Grundmaterial und ist kostengünstig in einem einzigen präzisen Teil herstellbar. Glas und Überfangschicht sind sehr stabil gegenüber Temperatur, Feuchte und Zeit. Die Beleuchtungen von Messobjekt (Papier) und Überfangschicht (Deckfläche nach Reflexion an der verspiegelten Basisfläche) sind weitgehend gleich. Der optisch Pfad von der Lichtquelle zum Messobjekt und zur Überfangschicht sind gleich. Die Opalschicht ist ein Lambertscher Streuer und streut das im wesentlichen unter 45° (von unten) auftreffende Licht in den vollen Raumwinkel, insbesondere auch nach oben in Richtung Linsenkopf der Aufpickanordnung. Die Kalibrationsmessung stimmt sehr genau mit einer Kalibration auf einer herkömmlichen Weisskachel in Messebenenposition überein. Die Ausbildung als Prisma mit Trapezquerschnitt oder als Pyramidenstumpf erlaubt die Summation der Beleuchtungsstärken von zwei oder mehreren Lichtquellen. Der Glaskörper erlaubt die individuelle Kalibration von weissen Leuchtdioden und auch von schmalbandigen R G B Leuchtdioden oder Leuchtdioden mit schmalbandigen Konvertern. Der Glaskörper erlaubt die Kalibration von Leuchtdioden mit Polarisator, da die Opalschicht vollständig depolarisiert. Die erfindungsgemässe Umlenkanordnung ist auch in Verbindung mit den weiter unten erläuterten Linienbeleuchtungen einsetzbar und sie erlaubt auch die Kalibration eines GlanzMesskanals, worauf ebenfalls weiter unten noch näher eingegangen wird.

Selbstverständlich könnte die Umlenkanordnung 44 auch aus einem anderen transparenten Material (z.B. Kunststoff) in Kombination mit einer geeigneten Streuschicht ausgebildet sein (z.B. im Spritzgussverfahren). Die Streuschicht kann analog dem Milchüberzugglas durch ein zweites, homogen mit dem transparenten Material verbundenes (Kunststoff-)Material oder durch eine streuend strukturierte Oberflächenausbildung des transparenten Materials gebildet sein. Anstelle oder zusätzlich zur Verspiegelung der Basisfläche könnte diese auch totalreflektierend ausgebildet sein.

Es versteht sich, dass die Hellreferenzanordnung vor dem Einsatz mittels einer präzise vermessenen, herkömmlichen externen Weisskachel über eine Transferkalibration (im Roboter bei der Herstellung und Prüfung) absolut geeicht wird.

Ein weiterer Aspekt der Erfindung betrifft die Ausgestaltung der Beleuchtungsanordnung 10. Für den Einsatz im Farbmessgerät bzw. speziell Spektralfotometer besonders geeignet ist eine ringförmige Beleuchtungsanordnung, wie sie in Fig. 8 dargestellt ist. Hierbei ist eine grosse Zahl von einzelnen Leuchtdioden-Chips 11 dicht gepackt in einem schmalen und eng definierten Kreisring angeordnet, der die optische Achse 21 der Aufpickanordnung 20 koaxial umgibt. Die typische Grösse der einzelnen Leuchtdioden-Chips beträgt etwa $0,4 * 0,4 * 0,4$ $mm^3$. Die Ebene des Leuchtdiodenrings steht senkrecht zur optischen Achse 21 und ist damit parallel zur Messebene ausgerichtet.

Der mechanische Aufbau der Ringbeleuchtungsanordnung 10 ist aus der Schnittdarstellung der Fig. 9 erkennbar. Auf einer gut wärmeleitenden Grundplatte 12 befinden sich eine Leiterplatte 13 und darauf zwei koaxiale Ringwände 14 und 15. In der Leiterplatte ist eine ringförmige Nut 13a ausgespart. Die Leuchtdioden-Chips 11 sind in der Nut 13a angeordnet und direkt auf die Grundplatte 12 geklebt ("die bonding"). Die elektrischen Anschlüsse der Leuchtdioden-Chips 11 sind mittels nicht dargestellter feiner Drähte mit entsprechenden Kontaktflächen der Leiterplatte 13 verbunden ("wire bonding"), welche die Verbindung zur elektronischen Steuerung 100 herstellt, wobei auch eine selektive Ansteuerung der einzelnen Leuchtdioden 11 und/oder von Gruppen von Leuchtdioden 11 vorgesehen sein kann. Der Zwischenraum zwischen den beiden Ringwänden 14 und 15 ist mit einem Harz 16 vergossen, welches ein Konverter-Material (Phosphor) zur Umwandlung gewisser Wellenlängenbereiche des von den Leuchtdioden abgestrahlten Lichts in andere Wellenlängenbereiche enthält. Dies wird weiter unten noch näher erläutert. Von der Oberfläche des Harz-Vergusses 16 strahlt das Beleuchtungslicht mit Cosinus-Charakteristik (Lambert-Strahler) ab, was in der Fig. 9 durch die Pfeile 17 angedeutet ist. Die Hauptstrahlungsrichtung (Strahlungskeule) steht dabei senkrecht zur Ebene des Leuchtdiodenrings.

Der Einsatz von Leuchtdioden (LEDs) als Lichtquellen für die Beleuchtungsanordnung hat viele Vorteile. LEDs sind langlebig und lassen sich schnell und während sehr kurzer Zeit ein- und ausschalten, wodurch sie dementsprechend stromsparend sind. Durch Takten der Beleuchtung und durch Differenzbildung einer Messung mit LEDs "ein" und einer folgenden Messung mit LEDs "aus" kann der Fremdlichteinfluss während der Messung eliminiert werden. LEDs emittieren keine Wärmestrahlung (IR) in den beleuchteten Bereich. LEDs sind in spezifischen Spektralbereichen erhältlich, z.B. Weiss, UV, R, G, B, etc.. Typische kommerziell erhältliche Leuchtdioden-Produkte sind die Lumiled Emitter, Osram Golden Dragon, Cree XLamp etc..

In der Ringbeleuchtung der Fig. 8 sind blaue LEDs Chips (bei ca. 450 nm) und/oder UV-LEDs (bei ca. 390 nm) eingesetzt und mit einem Harz mit Konverter (Phosphor) überdeckt. Durch die dichte Besetzung und die schmale, eng definierte Zeilenform wird eine hohe Leuchtdichte erreicht.

Das erfindungsgemässe Konzept der eng besetzten LED-Linie und des Vergusses der LEDs mit Konverter enthaltendem Harz ist selbstverständlich nicht auf Ringbeleuchtungen beschränkt. Beispielsweise kann nach demselben Prinzip auch eine gerade Linienbeleuchtung aufgebaut werden, wie sie beispielsweise in Zeilenabtastgeräten erforderlich ist.

Je nach Einsatzzweck kann es auch vorteilhaft sein, die Leuchtdioden längs einer stückweise geraden oder anderswie gekrümmten Linie anzuordnen.

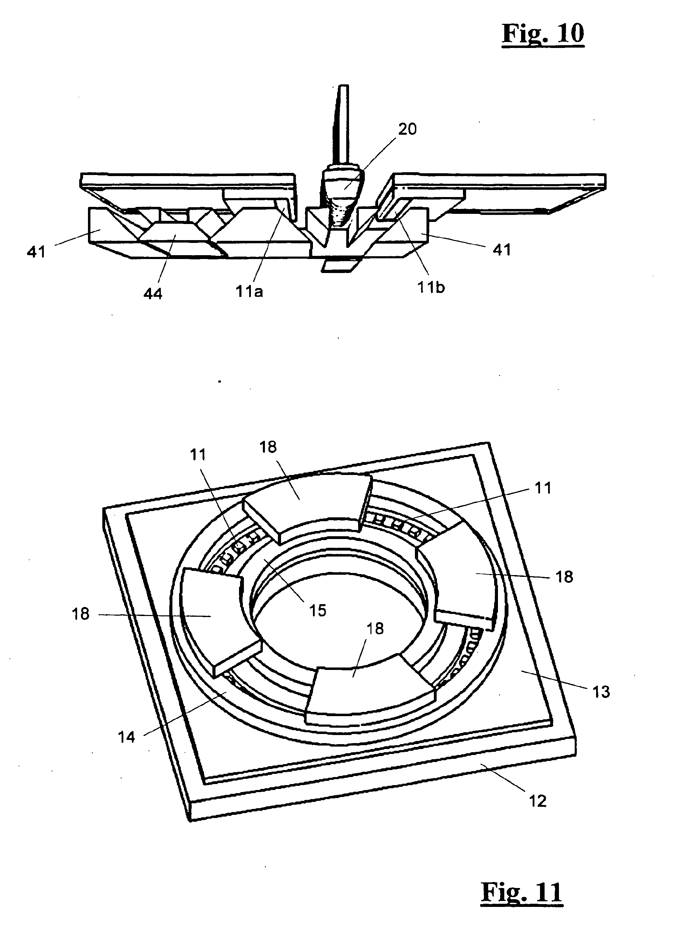

Die Figur 10 zeigt die relevanten Teile eines Beispiels einer solchen Zeilenabtastvorrichtung, wobei die Längsrichtung der Abtastvorrichtung im wesentlichen senkrecht zur Zeichenebene verläuft. Zu erkennen sind linienförmig hintereinander angeordnete Aufpickvorrichtungen 20, eine zwei gerade LED-Linien 11a und 11b umfassende Beleuchtungsanordnung und die Hellreferenzanordnung mit dem Schlitten 41 und der hier langgestreckten, im Querschnitt trapezförmigen Umlenkanordnung 44 in Messposition, also ausserhalb des Beleuchtungs- und Aufpickstrahlengangs.

Das erfindungsgemässe Beleuchtungskonzept mit dicht gepackten Leuchtdioden-Linien (gerade oder kreisförmige Anordnung) ermöglicht die optimale Anpassung der Beleuchtung an spezifische Einsatzbedingungen. Die Beleuchtungsanordnung kann mit engen Toleranzen sehr einfach und kostengünstig hergestellt werden.

Für den Einsatz in einem punktförmig messenden Farbmessgerät, speziell Spektralfotometer ist eine Ringbeleuchtung messtechnisch optimal, weil dadurch die vorgegebenen Beleuchtungsgeometrie-Normen am besten erfüllt sind und dabei gleichzeitig der höchste Lichtfluss im Messfleck erreicht wird. Für Zeilenmessgeräte ist eine Zeilenbeleuchtung mit zwei symmetrisch angeordneten LED-Zeilen optimal.

In LED-Zeilen (linear oder zirkular) können gemäss einem weiteren vorteilhaften Aspekt der Erfindung verschiedene LED Typen (R, G, B, UV) in Bereichen (Linien-Abschnitten oder Kreissegmenten) angeordnet werden und/ oder je mit Harz mit unterschiedlichen Konverter-Typen oder ev. auch ganz ohne Konverter vergossen werden. Beispielsweise erzeugt ein Bereich mit individuell schaltbaren UV-LEDs ohne Konverter reines UV Licht zur gezielten Anregung und Messung von Aufhellern im Papier. Ein Bereich mit individuell schaltbaren R, G, B - LEDs ohne Konverter erzeugt Licht in einem engen Spektralbereich und dient zur gezielten Dichtemessung. (Wenn nur in einem engen Spektralbereich beleuchtet wird, ist das Reststreulicht im Spektrometer stark reduziert.) Bereiche mit schaltbaren blauen oder UV- LEDs und vergossen mit spezifischen R, G, B Konvertern erzeugen ebenso Licht in einem engen Spektralbereich, der zur gezielten Dichte-Messung verwendbar ist.

In LED-Zeilen (linear oder zirkular) können verschiedene Bereiche (Linien-Abschnitte oder Kreissegmente) mit verschiedenen Filtern wie Polarisations-, R-, G-, B-oder UV-Filtern überdeckt werden, wie dies in der Fig. 11 dargestellt ist. Die Filter sind darin mit 18 bezeichnet. Messtechnisch ist die gezeichnete 4-zählige Symmetrie bevorzugt.

Beispielsweise emittiert ein Bereich mit individuell schaltbaren LEDs, der mit einem Polarisationsfilter überdeckt ist, polarisiertes Licht, ein anderer Bereich mit individuell schaltbaren LEDs ohne Polarisationsfilter emittiert unpolarisiertes Licht. Die Umschaltung von polarisiertem zu unpolarisiertem Licht kann somit rein elektrisch durch entsprechendes Ein- und Ausschalten der betreffenden LEDs erfolgen, die aufwändige mechanische Umschaltung entfällt. Für diese Anwendung muss im Aufpickkanal ein gekreuzter Polarisationsfilter als Analysator fest integriert sein, der aber bei unpolarisierter Messung nicht stört.

Ein anderer Bereich mit schaltbaren weissen LEDs, der mit einem R, G oder B Filter überdeckt ist, emittiert in einem schmalen Spektralbereich und dient wiederum zur Verbesserung der Dichtemessung.

Ein weiterer individuell schaltbarer Bereich mit UV Filter erlaubt bei Verwendung von sehr breitbandigen weissen LEDs (mit Emission von 380 nm UV - 730 nm tiefrot) durch Ansteuerung des entsprechenden Bereiches den UV-Anteil elektrisch zu-und abzuschalten.

Die Ansteuerung der LEDs in den einzelnen Bereichen der Beleuchtungsanordnung erfolgt, wie schon erwähnt, über die elektrische Steuerung 100, die ggf. entsprechende Befehle von einer übergeordneten internen oder externen Steuerung erhält.

Für messtechnische Einsätze geeignete Leuchtdioden und dazu passende Konverter-Materialien sind in der

EP 1 694 049 B1

Fachliteratur und den Datenblättern der einschlägigen Hersteller (z.B. Lumiled) beschrieben. Eine umfassende Übersicht über den diesbezüglichen Stand der Technik wurde in einem Referat "Leuchtstoffe für weisse LED in der Allgemeinbeleuchtung"'von Dr. Stefan Tews (Litec LLL GmbH, Greifswald, Deutschland) im Rahmen einer VDI-Tagung 2004 gegeben.

Für die Erfindung werden weisse LEDs mit YAG-Leuchtstoffen oder bevorzugt Ortho-Silikatleuchtstoffen (BOSE) als Konverter (Phosphore) eingesetzt. Diese Leuchtstoffe sind in verschiedenen Farben herstellbar und können auch gemischt werden, die Absorption und die Emission sind spektral getrennt. Die Leuchtstoffe können von blau (ca. 450 nm) bis UV (ca. 390 nm) gepumpt werden.

Gemäss Seite 25 des Referats stellt die Kombination einer blauen LED (452 nm) mit zwei BOSE-LS-Konvertern (blau-grün, 508 nm und tief-orange, 595 nm) eine massive Verbesserung gegenüber YAG dar. Wesentlich ist dabei, dass das Minimum zwischen dem LED-Emissionsmaximum bei ca. 450 nm und der Konverter-Emission oberhalb 500 nm weitgehend vermieden wird.

Auf Seite 26 des Referats ist das Spektrum der "besten" Kombination einer UV-LED mit einer Mischung diverser Konverter dargestellt. Dabei ist das Spektrum von 400 nm bis 700 nm gut abgedeckt und die Farbwiedergabe (Color Rendering Index) hervorragend. Die LED strahlt bei 392 nm, als Konverter werden die Typen BAM (blau, 450 nm), BOSE (grün, 515 nm), BOSE (orange, 593 nm) und Silikat-Germanat-LS (rot, 657 nm) eingesetzt.

Diese LED-Konverter-Kombination ist besonders vorteilhaft, weil dabei eine UV-LED verwendet wird, die auch als als UV Quelle zur gezielten Anregung von Papier-Aufhellern eingesetzt werden kann.

In zahlreichen Einsatzfällen des Spektralfotometers, z.B. für die Messung eines Druckbogens, muss die Abtastung kontaktlos erfolgen. Die Auflagefläche des Bogens ist über die relativ grosse Bogenfläche in der Regel nicht perfekt eben. Es treten deshalb beim Einmessen Abstandsänderungen auf. Diese dürfen die Messwerte nicht beeinflussen. Dies erfordert, dass die Beleuchtungs- und die Aufpickanordnung über den tolerierten Bereich von ein paar Zehntelmillimeter abstandsunabhängig sein müssen.

Das Sichtfeld der Aufpickanordnung wird von der Beleuchtung überleuchtet. Da die Erfassungswinkel der Aufpickanordnung sehr eingeschränkt sind (gemäss den Farbmessnormen sind nur Erfassungswinkel von +/- 5° tolerierbar), wird damit die Leucht- oder Strahldichte im Messfeld gemessen, welche unabhängig vom Abstand ist. Es muss also nur die Beleuchtungsanordnung eine konstante, vom Abstand unabhängige Bestrahlungsstärke erzeugen.

Eine geeignete Lösung für eine abstandsunabhängige Beleuchtung unter 45° ist bereits in der eingangs schon erwähnten EP-A 1 507 134 (entsprechend US-Patentanmeldung Ser.No. 10/894797 vom 20.07.2004) beschrieben. Dabei ist eine Strahlungsquelle mit Lambertscher Abstrahlcharakteristik parallel zur Ebene des Messfelds angeordnet. Die Position der Strahlungsquelle relativ zum Messfeld wird so gewählt, dass das Licht im Winkel von 45° auf das Messfeld trifft. Gemäss dem photometrischen Grundgesetz wird so eine Abstandsunempfindlichkeit über einen für die Praxis ausreichend grossen Abstandsvariationsbereich realisiert.

Die erfindungsgemässe Ringbeleuchtungsanordnung ist nach genau denselben Grundsätzen aufgebaut und positioniert. Die Abstandsunabhängigkeit ist dann erreicht, wenn die Ebene des Leuchtdioden-Rings parallel zur Messebene liegt und der Abstand des Rings von der Messebene gleich dem Radius des Rings gewählt wird. Bei der Ausbildung der Beleuchtungsanordnung als gerade Leuchtdioden-Zeile ist die Abstandsunabhängigkeit in ausreichender Näherung erfüllt.

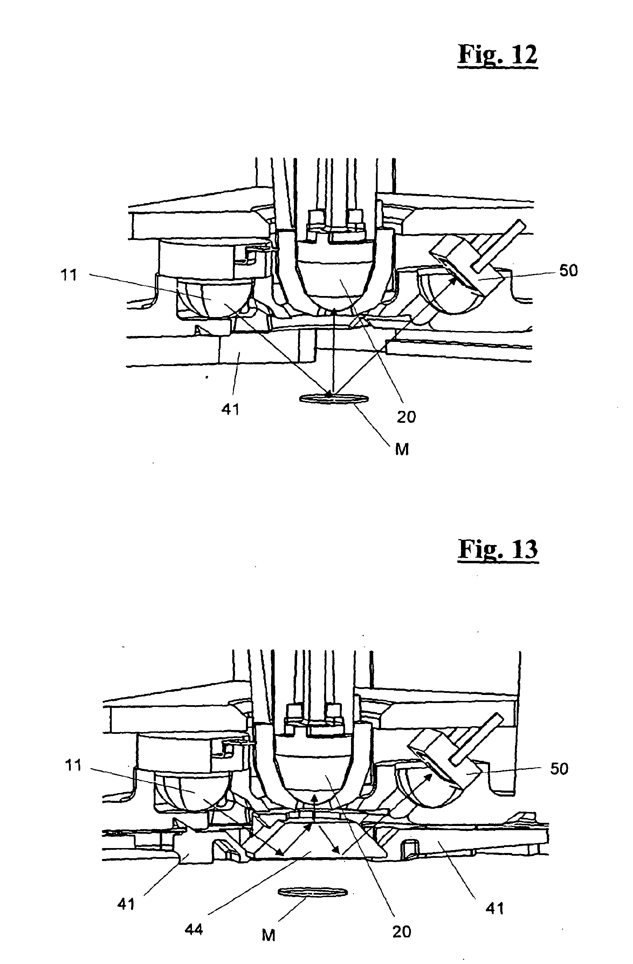

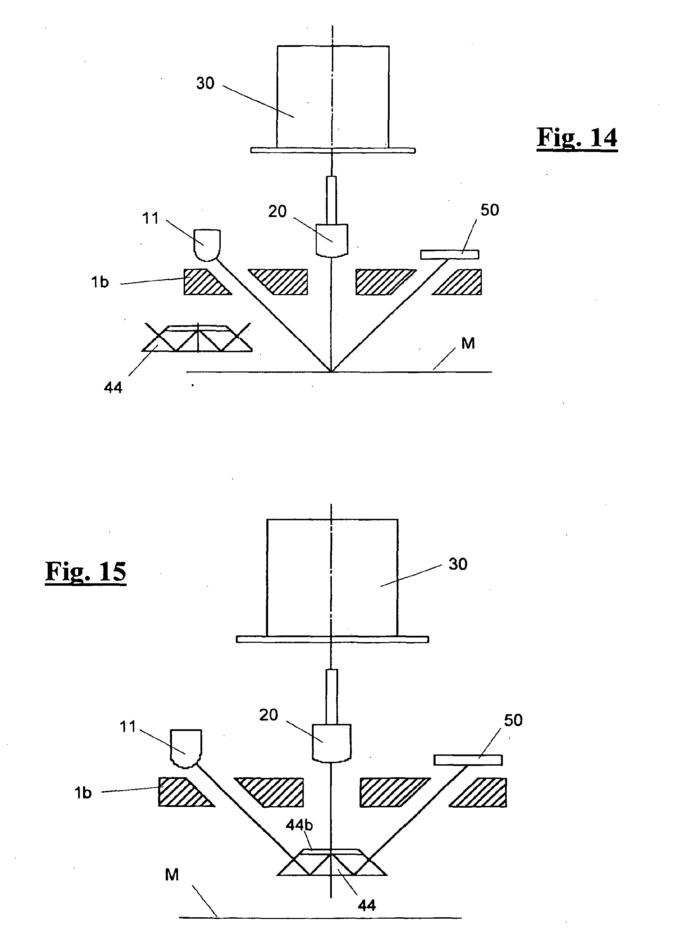

Ein weiterer wichtiger Aspekt der Erfindung befasst sich mit dem praktischen Einsatz des Farbmessgeräts, speziell Spektralfotometers zur Bestimmung (Klassifizierung) der Qualität (des Typs) eines Messobjekts - in der Regel Druckpapier - über eine Glanzmessung unter Miteinziehung des der Beleuchtungsanordnung gegenüberliegenden Fotoempfängers 50, dessen Sichtbereich durch eine Apertur auf den Messfleck beschränkt ist. Die Apertur wird durch eine im Gehäuse vorgesehene Blende 1b gebildet (Fig. 14). Bei der Kalibration des Glanzkanals kommt ebenfalls wieder die speziell ausgebildete Hellreferenzanordnung zum Einsatz. Die Figuren 12-15 illustrieren die Verhältnisse bei der eigentlichen Glanzmessung und bei der Kalibration.

Unter Qualitätsbestimmung wird eine Klassifizierung des Papiers (oder allgemein Substrats) nach seinen Reflexionseigenschaften verstanden. In der Praxis wird dabei häufig nur zwischen zwei Papierqualitäten unterschieden, nämlich "glänzend" oder "matt". Es leuchtet ein, dass zu dieser Unterscheidung bzw. Klassifizierung prinzipiell das vom (unbedruckten) Papier reflektierte Licht herangezogen werden kann. Allerdings empfängt der Fotoempfänger 50 nicht nur das reflektierte Licht, sondern auch einen Teil des vom Papier diffus gestreuten bzw. reemittierten Lichts. Dieser Lichtanteil muss für die absolute Glanzmessung und die darauf basierende Klassifizierung der Papierqualität abgezogen werden. Dabei wird wie folgt vorgegangen:

Zunächst wird ein Messfleck auf dem unbedruckten Papier mit weissem Licht beleuchtet. Mit der Aufpickanordnung 20 und dem angeschlossenen Spektrometer 30 (zusammen als "Farbmesskanal" bezeichnet) wird das diffus gestreute Licht (Reemission) gemessen und mit dem Fotoempfänger 50 ("als Reflexkanal" bezeichnet) das auf der Papieroberfläche unter 45° reflektierte Licht (Reflexion). Zusätzlich misst der Reflexkanal aber, wie schon erwähnt, unerwünschterweise auch einen Teil des vom Papier diffus gestreuten Lichts (Reemission). Das Signal im Reflexkanal ist proportional zur Beleuchtungsintensität, die insbesondere mit dem Reflexkanal durch Einschieben der Hellreferenz gemessen werden kann.

Sowohl bei der Eichung als auch im praktischen Messeinsatz wird mit dem Verhältnis $Q_{Reflexion}$ des Signals $S_{Reflexion}$ im Reflexkanal bei ausserhalb des Strahlengangs befindlicher Hellreferenz, d.h. bei der Messung auf dem Messobjekt und des Signals $S_{Reflexion\_0}$ bei im Strahlengang befindlicher Hellreferenz gerechnet.

$$Q_{Reflexion} = S_{Reflexion} / S_{Reflexion\_0}$$

Das Signalverhältnis $Q_{Reflexion}$ des Reflexkanals setzt sich aus zwei Anteilen zusammen:

$$Q_{Reflexion} = a * Reflexion + b * Reemission,$$

wobei a und b zwei durch Eichmessungen bestimmte Parameter sind. Diese sind für ein Farbmessgerät Konstante und durch die Geometrie bestimmt, im wesentlichen durch die Gestaltung der Apertur. Die Parameter a und b sind durch Toleranzen bedingt bei jedem Farbmessgerät etwas verschieden und müssen daher für jedes Farbmessgerät bei der Eichung individuell bestimmt werden.

Die Apertur ist praktischerweise so gewählt, dass an einem typischen weissen Glanzpapier das Signal auf dem Reflexsensor 50 zu ca. 50% durch die Reemission und zu 50% durch die Reflexion bestimmt wird. Das Signalverhältnis 50:50 ist nicht wesentlich, wichtig ist nur, dass das Nutzsignal (Reflexion) gegenüber dem Störsignal (Reemission) nicht im Rauschen untergeht.

Die Parameter a und b werden bei der Eichung des Farbmessgeräts in der Produktion durch vorzugsweise robotergesteuerte Messungen an einer schwarz glänzenden Kachel (Schwarzglas, Remission typ. 0%, Reflexion typ. 4%) und einer matt weissen Kachel (BCRA Weiss, Remission typ. 90%, Reflexion typ. 0%) bestimmt:

$$a = Q_{Reflexion\_Schwarzkachel} / 4\% \, , \qquad\qquad b = Q_{Reflexion\_Weisskachel} / 90\%$$

Darin bedeuten $Q_{Reflexion\_Schwarzglas}$ das gemessene Signalverhältnis des Reflexkanals bei der Messung auf der Schwarzkachel und $Q_{Reflexion\_BCRA\_Weiss}$ das gemessene Signalverhältnis des Reflexkanals bei der Messung auf der Weisskachel.

Die Figuren 12 und 14 zeigen das Farbmessgerät bei der Glanzmessung.

Für die Glanzmessung und darauf basierende Klassifizierung der Papierqualität ist nur die absolute Reflexion (der absolute Glanz) von Interesse. Bei bekannten Faktoren a und b und im spektralen Messkanal gemessener spektraler Reemission lässt sich die absolute Reflexion (der absolute Glanz) rechnerisch wie folgt bestimmen:

$$Reflexion = (1/a) * Q_{Reflexion} - (b/a) * R$$

Darin bedeuten $Q_{Reflexion}$ das gemessene Signalverhältnis auf dem Reflexkanal und R die im Farbmesskanal (hier Spektralkanal) gemessene Remission der Messobjektoberfläche.

Die relativen Empfindlichkeiten von Farbmesskanal (hier spektralem Messkanal) und Reflexkanal müssen sowohl bei der Eichung als auch bei der Glanzmessung kalibriert werden, was gemäss einem wichtigen Aspekt der Erfindung mit Hilfe von Messungen an der weissen Streuschicht 44b der (geräte-internen) Hellreferenzanordnung erfolgt und in den Figuren 13 und 15 dargestellt ist. Die Umlenkanordnung 44 ist in die Strahlengänge eingeschoben. Der Spektralkanal erfasst das von der Streuschicht 44b nach oben gestreute Licht, der Reflexkanal erfasst das von der Streuschicht 44b nach unten rechts gestreute Licht, das über die verspiegelte Basisfläche und die rechte Austrittsfläche durch die Apertur in den Fotoempfänger 50 gelangt.

Die Bestimmung der absoluten Reflexion und darauf basierend die Klassifizierung der Substratqualität erfolgt beispielsweise in einer nicht näher bezeichneten Stufe der Steuerung 100 des Spektralfotometers. Sie kann aber selbstverständlich auch in einer übergeordneten Steuerung oder einem Rechner erfolgen, mit der bzw. dem das Spektralfotometer (in an sich bekannter Weise) kommuniziert.

Ein anderer wichtiger Aspekt der Erfindung befasst sich mit der weiteren Verbesserung der schon weiter vorne angesprochenen Abstandsunabhängigkeit zwischen Messkopf und Messobjekt. Bei kontaktloser Messung von Farben auf Substraten, zum Beispiel mittels einer Messanordnung mit 45°/0°-Normmessgeometrie, führt eine Abweichung vom nominellen Abstand und Winkel zwischen Messanordnung und Messobjekt (Substrat) zu verfälschten Messresultaten. Die Hauptfehlerkomponente ist die Änderung der Beleuchtungsstärke auf dem Substrat und damit der gemessenen Änderung der reemittierten Lichtmenge. Da die Weisskalibration der Messanordnung in der Anwendung üblicherweise auf einer internen oder externen Hell- oder Weissreferenz unter Normalbedingungen (das heisst unter nominellem Abstand und Winkel zwischen Messobjekt und Messanordnung) stattfindet, ergeben sich bei der Berechnung der Reemission des Substrates Fehler - im wesentlichen in der Helligkeit (L), aber auch - meist in geringerem Mass - im Farbort (a, b). Eine Änderung der Beleuchtungsstärke auf dem Messobjekt bei einer Höhen- oder Winkeländerung resultiert aus der Änderung der Distanz zwischen Beleuchtungslichtquelle und dem Messobjekt, bei einfacheren Beleuchtungsanordnungen ist das sogar der dominante Fehler (Beleuchtungsstärke ist proportional dem Abstandsquadrat). Eine Änderung der Beleuchtungsstärke auf dem Messobjekt bei einer Höhen- oder Winkeländerung resultiert ferner aus der Änderung der auftretenden Beleuchtungswinkel auf dem Messobjekt. Je einfacher der Aufbau der Messoptik, desto grösser ist dieser Anteil. Bei der erfindungsgemässen Ringbeleuchtung ist die Variation relativ gering, die Beleuchtungsstärke ist proportional zum Cosinus des mittleren Einfallswinkels. Eine Änderung des Spektrums der Beleuchtung bei einer Höhen- oder Winkeländerung tritt dann auf, wenn das Beleuchtungssystem das Messobjekt spektral nicht exakt homogen beleuchtet. Dieser Anteil kann gross sein, wenn die Beleuchtungslichtquelle unter verschiedenen Winkeln spektral unterschiedlich abstrahlt, was insbesondere bei weissen LEDs vorkommt. Eine Änderung der Empfindlichkeit des Aufpick-Kanals tritt dadurch auf, dass bei einer Änderung von Höhe oder Winkel sich der beobachtete Messfleck in Grösse und Form ändert.

Das kontaktlose Messen mit unterschiedlichen Abständen und Winkeln zwischen der Messanordnung und dem Messobjekt ist von Interesse z.B. bei der Prozesskontrolle und/oder Regelung der farblichen oder spektralen Eigenschaften bei der Herstellung von Materialien wie Papier, Folien, Keramik, Stoff, Plastik, Leder etc., welche am Band hergestellt werden. Es ist ferner von Interesse bei Messgeräten, die dazu ausgelegt sind, ein- oder zweidimensionale Farbtestkarten auszumessen, und bei Spektral-oder Farbsensoren, die zur Kontrolle oder Regelung der Farbe in Maschinen, welche zum Bedrucken von Materialien verwendet werden, eingesetzt werden. Kontaktlose Messung ist immer dann erforderlich, wenn das Messobjekt auf der zu messenden Oberfläche nicht berührt werden darf, z.B. weil Druckfarbe noch feucht ist oder weil die Oberfläche empfindlich ist. Kontaktlose Messung ist immer dann von technischem Vorteil, wenn dadurch die Konstruktion vereinfacht werden kann. Kontaktlose Messung ist auch von technischem Vorteil, weil dabei verschiedene Substratdicken (z.B. verschiedene Papierqualitäten) und auch unebene Substrate (z.B. texturierte Folien) gemessen werden können.

Bei Messungen an unterschiedlich dicken bedruckten Materialien (Messobjekten) ist es heute üblich, die durch unterschiedliche Dicken des bedruckten Materials hervorgerufenen unterschiedlichen Abstände zwischen Messfläche und Messanordnung durch Relativ-Messung zu eliminieren. Das heisst, die Messwerte werden auf das Signal vom Grundsubstrat im gegebenen Abstand bezogen (z.B. auf das Weiss des zu bedruckenden Papiers.) Das Messresultat wird so zwar unabhängig vom Abstand, ist aber abhängig vom verwendeten Substrat und somit nicht mehr direkt vergleichbar zu Messwerten, welchen andere Substrat-Materialien zugrunde liegen.

Durch die weiter vorne beschriebene Ausbildung und Anordnung der Beleuchtungsanordnung wird bereits eine sehr gute Toleranz gegenüber Abstandsschwankungen erreicht. Durch die im folgenden erläuterten, erfindungsgemässen zusätzlichen Massnahmen kann die Abstands- und Winkelunabhängigkeit jedoch noch weiter verbessert werden. Dabei ist die vorstehend beschriebene abstands- und winkeltolerante Ausbildung der Beleuchtungsanordnung zwar von Vorteil, weil dann die erforderlichen Korrekturen kleiner bleiben, sie ist jedoch keine Grundvoraussetzung.

Die wesentlichste Grundidee der Korrekturmassnahmen besteht in einer Eichung des Spektralfotometers (oder beliebigen anderen Farbsensors) auf unterschiedliche Messobjekt-Abstände (Höhen) und Winkel. Dazu wird bei der Produktion des Farbsensors, genauer bei dessen Eichung, während der die spezifischen Eigenschaften von jedem produzierten Sensor ermittelt werden, ein zusätzlicher Schritt eingeführt, bei welchem die Höhen- und/oder Winkelabhängigkeit jedes hergestellten Sensors ausgemessen wird.

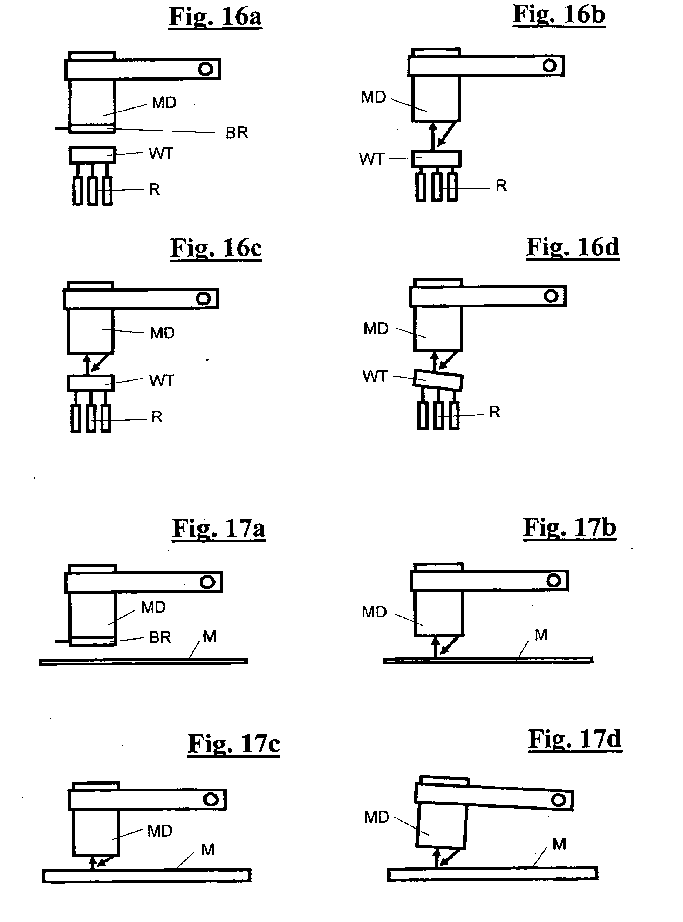

Diese Eichmessungen können z.B. so geschehen, dass eine Referenz-Probe (Referenz-Messobjekt), vorzugsweise eine sehr genau ausgemessene Weisskachel, in unterschiedlichen Abständen und/oder Winkeln zum Sensor ausgemessen wird und die zugehörigen Messdaten im Sensor gespeichert werden (absolute Weisskalibration). Die Figuren 16a-16d illustrieren dies. Der Farbsensor ist mit MD bezeichnet. Das Referenz-Messobjekt ist mit WT bezeichnet und wird über einen hier nur durch drei verstellbare Stützorgane'R symbolisierten Messroboter in unterschiedlichen Abständen und Winkellagen relativ zum Farbsensor MD positioniert. Die relative Weisskalibration des Sensors erfolgt mittels der im Sensor eingebauten internen Weissreferenz, die in Fig. 16a in aktiviertem, d.h. in den Messstrahlengang eingebrachtem Zustand dargestellt und mit BR bezeichnet ist. Diese interne Weissreferenz besteht beim vorliegenden Spektralfotometer in der beschriebenen Hellreferenzanordnung.

Konkret wird die absolute Weisskalibration des Sensors in der Fertigung nicht nur exakt auf Normhöhe und Normwinkel durchgeführt, sondern gemäss der Erfindung für ein Set von unterschiedlichen Höhen und unterschiedlichen Winkeln, wobei ein ganzes Daten-Set von Kalibrationsdaten resultiert, die je typisch aus einem Weisswert für jede Farbe oder jeden Spektralbereich (im einfachsten Fall ein eindimensionaler Vektor) bestehen. Das Kalibrationsdaten-Set wird in Zuordnung zu den zugrundeliegenden Abstands- und Winkeldaten vorzugsweise im Sensor bzw. dessen Steuerung gespeichert.

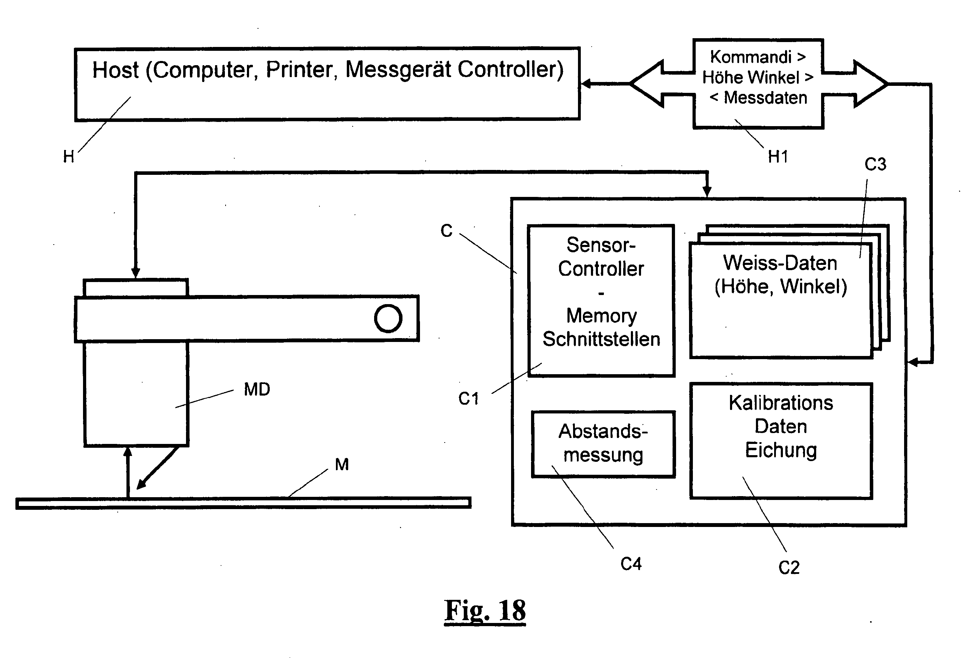

Die Fig. 18 zeigt ein Prinzipschema des so erweiterten und verbesserten Spektralfotometers bzw. allgemein Farbsensors. Dargestellt sind der Messkopf MD und die typischerweise prozessor-basierte Steuerung C des Farbsensors. Die Steuerung C enthält zusätzlich zu den in jedem modernen Farbsensor vorhandenen Steuerungsblöcken C1 (Ansteuerung der Lichtquellen, Ansteuerung der fotoelektrischen Empfänger, ....) und den konventionellen Eich- und Kalibrationsdaten C2 noch den schon erwähnten Satz von abstands- und winkelabhängigen Kalibrationsdaten C3. Ausserdem kann die Steuerung C noch über nicht dargestellte Schnittstellen mit einer übergeordneten Steuerung H kommunizieren, z.B. von dieser Befehle und Steuerungsdaten H1 entgegennehmen oder Messdaten an die Steuerung H senden.

Die Figuren 17a-d zeigen den Farbsensor im praktischen Messeinsatz in vier verschiedenen Situationen. In Fig. 17a ist die interne Weissreferenz BR für den relativen Weissabgleich aktiviert. In Fig. 17b befindet sich die Messebene M im nominellen Abstand zum Farbsensor MD. In Fig. 17c ist der Abstand kleiner als der nominelle Abstand, und in Fig. 17d ist der Messkopf gegenüber der Messebene um einen kleinen Winkel gekippt.

Für den praktischen Einsatz des Messgeräts (Sensors) in einer (nicht dargestellten) Anwendungseinrichtung (z.B. einem Drucker) sind zwei Fälle zu unterscheiden: 1. Abstand und/oder Winkel des Messobjekts relativ zum Sensor sind bekannt (z.B. durch Kenntnis der verwendeten Papiersorte in einem Drucker) und 2. Abstand und/oder Winkel sind nicht bekannt.

Im ersten Fall wird dem Sensor der Abstand und/oder Winkel zum Substrat in geeigneter Form mitgeteilt. Dies kann z.B. mittels eines Kommandos H1 der übergeordneten Steuerung H (Fig. 18) über die Kommunikationsschnittstelle des Sensors geschehen. Im beispielsweisen konkreten Einsatzfall eines Farbsensors in einer Druckmaschine teilt letztere dem Farbsensor Abstand und/oder Winkel mit.

Anhand der durch die im Sensor zuvor gespeicherten Kalibrationsdaten-Sets C3 gegebenen Kenntnis der Höhen- und/oder Winkelabhängigkeit und der mitgeteilten aktuell vorliegenden Orientierung zwischen Sensor und Messobjekt (Abstand, Winkel) wird die Helligkeit des farbmetrischen Messresultates oder das Signal des spektralen Messresultates korrigiert. Konkret wird dabei zur Berechnung der Messdaten (Remissionsspektrum oder diskrete Remissionswerte je Farbintervall) der jeweils passende Weissvektor verwendet, also derjenige abgespeicherte Weissvektor C3, der bei derselben Höhe und bei demselben Winkel bei der ursprünglichen Eichung bestimmt wurde. Bei nicht abgespeicherten Abstands- und Winkelwerten wird zwischen den nächstliegenden Weissvektoren z. B. bilinear interpoliert.

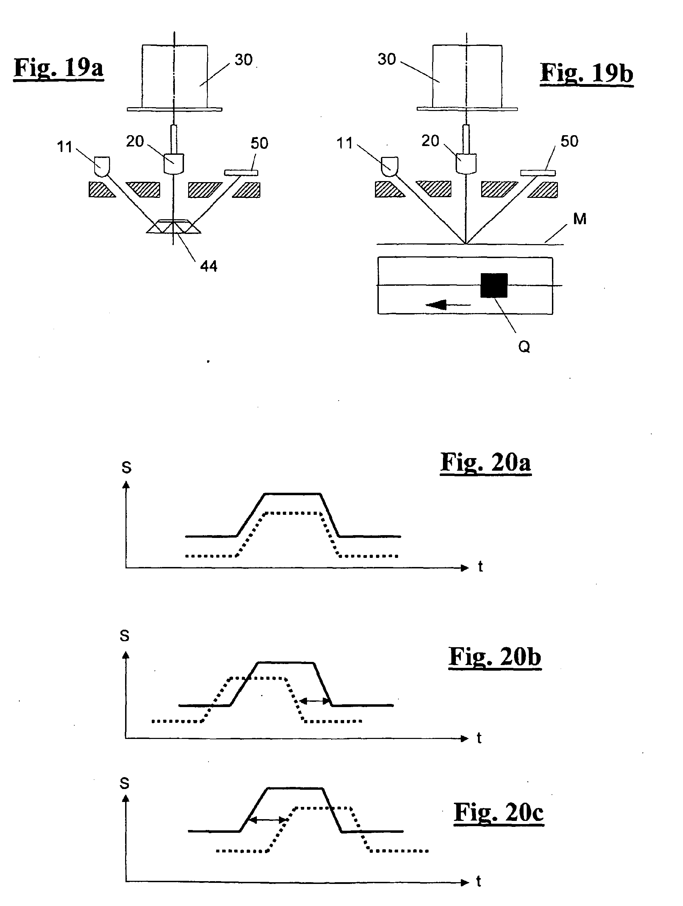

Falls dem Sensor nicht mitgeteilt werden kann, unter welchen geometrischen Bedingungen die Messung erfolgen wird (Einsatzfall 2), wird der Sensor gemäss der Erfindung um eine zusätzliche Funktion C4 (Fig. 18) erweitert, die es gestattet, die fehlende Information selber zu ermitteln. Die Abstandsmessung kann z.B. durch Triangulation mit Hilfe einer zusätzlichen Optik erfolgen. Besonders zweckmässig und vorteilhaft ist gemäss einem weiteren Gedanken der Erfindung aber eine Vorgehensweise, welche die Signale des spektralen Messkanals mit denjenigen eines zusätzlichen Messkanals zeitlich korreliert und daraus eine Abstandsinformation gewinnt. Dabei ist als zusätzlicher Messkanal der bereits vorhandene, für Glanz-Messungen vorgesehene Reflex-Kanal einsetzbar, so dass für die Abstandsmessung keine zusätzlichen optischen Komponenten erforderlich sind. Diese Methode und die dazugehörigen Mittel werden im folgenden am Beispiel des erfindungsgemässen Spektralfotometers anhand der Figuren 19a-b und 20a-c näher erläutert.

Die Fig. 19a zeigt das Spektralfotometer während der relativen Hellkalibrierung mittels der in den Strahlengang eingeschobenen Hellreferenzanordnung bzw. deren Umlenkanordnung 44. In Fig. 19b ist das Spektralfotometer zur Messung eines in der Messebene M befindlichen Messobjekts bereit. Die beiden Figuren entsprechen den Figuren 14 und 15 und bedürfen deshalb soweit keiner näheren Erläuterung.

Zur Erzeugung der Abstandsinformation wird das Spektralfotometer (bzw. allgemein der Farbsensor) linear und parallel über dem auf der Messebene befindlichen Messobjekt (z.B. Papier) verschoben oder das Messobjekt wird unter dem Spektralfotometer verschoben. Auf dem Messobjekt ist ein Muster z.B. in Form eines schwarzen Quadrats Q (Fig. 19b) vorhanden, z.B. aufgedruckt. Das Muster kann beispielsweise durch ein passendes Feld des Messobjekts (z.B. einer Farbmesstafel) gebildet sein. Dieses Muster Q wird von den beiden Messkanälen (Spektralkanal 20,30 und Reflexkanal 50) in Funktion des Abstandes zwischen Sensor und Messobjektoberfläche zu unterschiedlichen Zeitpunkten erkannt. Die Figuren 20a-c zeigen die Messsignalverläufe der beiden Messkanäle in drei verschiedenen Situationen. Die ausgezogenen Linien stellen die Signalverläufe des Spektralkanals dar, die gestrichelten Linien diejenigen des Reflexkanals. In Fig. 20a befindet sich das Messobjekt bzw. dessen abgetastete Oberfläche in nominellem Abstand zum Sensor, in den Figuren 20b und 20c in kleinerem bzw. grösserem Abstand. Die Phasenverschiebung der Signalverläufe der beiden Kanäle bildet ein Mass für den Abstand zwischen Sensor und Messobjekt und wird in einem weiteren Steuerungsmodul C4 der Steuerung C des Spektralfotometers (bzw. Farbsensors) ermittelt und in entsprechende Abstandsdaten umgerechnet (Fig. 18). Diese Abstandsdaten werden dann wiederum zur Auswahl des zugeordneten Weiss-Vektors in den abgespeicherten Kalibrationsdaten C3 herangezogen.

Es versteht sich, dass die Bestimmung des Abstands zum Messobjekt auch mit anderen Mitteln und Messmethoden erfolgen kann, z.B. mittels mechanischer oder kapazitiver Abstandssensoren.

Die vorstehend erläuterte Abstands/Winkelkorrektur kann für unterschiedliche Sensoren eingesetzt werden, z.B. Spektralfotometer, Colorimeter, Densitometer etc., und ist für Messungen an unterschiedlichen Substrat-Typen geeignet, z.B. Papier, Folien, Keramik, Stoff, Plastik Leder, etc..

Die Abstands/Winkelkorrektur kann auf verschiedenen Ebenen erfolgen: Entweder im Messgerät (Sensor) selber oder in einer übergeordneten Einrichtung, z.B. einem Drucker oder einem Computer, an den der Sensor angeschlossen ist, oder in der Steuerung eines Messgeräts, in das der Sensor eingebaut ist.

Die vorstehenden Methoden zur Winkelkorrektur lassen sich auch im Falle von berührenden Messungen anwenden, wenn z.B. aus irgendwelchen Gründen Winkel und Abstand nicht optimal eingestellt werden können. Dies ist z.B. der Fall, wenn der Messkopf auf einem Substrat rollt oder aufliegt und wegen unterschiedlicher Substratdicken vom Sollwert abweichende Winkellagen einnimmt (Nickbewegung des Messkopfs).

Mit der erfindungsgemässen Abstands- und Winkelkorrektur wird der Beleuchtungslichtabfall bei nicht nominellem Abstand/Winkel rechnerisch kompensiert und daher eine wesentliche Verbesserung der absoluten Messgenauigkeit erreicht. Zudem wird eine höhere Inter-Instrument-Genauigkeit erzielt, d.h. die Übereinstimmung der Messresultate von verschiedenen Sensoren unter identischen nicht optimalen Winkel-und Abstandkonditionen wird besser, da nicht alle Sensoren sich bei gleichen Abweichungen von der Nominal-Position gleich verhalten, was bedingt ist durch Fertigungsstreuungen, speziell durch Streuungen der Beleuchtung bei Verwendung von Leuchtdioden.

**Patentansprüche**

1. Messkopf für ein Farbmessgerät, mit einer mindestens eine Lichtquelle (11) aufweisenden Beleuchtungsanordnung (10) zur Beleuchtung eines in einer Messebene (M) befindlichen Messobjekts unter einem Einfallswinkel von im wesentlichen 45°, mit einer Aufpickanordnung (20) zum Auffangen des vom Messobjekt remittierten Messlichts unter einem Ausfallswinkel von im wesentlichen 0° relativ zum Lot auf die Messebene, mit einer fotoelektrischen Empfängeranordnung (32) zur Umwandlung des von der Aufpickanordnung aufgefangenen Messlichts in entsprechende elektrische Signale und mit einer Hellreferenzanordnung (40), die mit einer in den Strahlengang zwischen der Beleuchtungsanordnung (10) und der Aufpickanordnung (20) einbringbaren und wieder entfernbaren, in einem relativ grossen Abstand zur Messebene (M) befindlichen Umlenkanordnung (44) versehen ist, welche in im Strahlengang befindlichem Zustand zumindest einen Teil des Beleuchtungslichts in die Aufpickanordnung (20) umlenkt, **dadurch gekennzeichnet, dass** die Umlenkanordnung (44) als prismatischer oder pyramidenstumpfförmiger oder kegelstumpfförmiger, im wesentlichen transparenter Körper ausgebildet ist mit einer spiegelnden ebenen Basisfläche (44a), einer dazu parallelen Streuschicht (44b) und mindestens einer seitlichen, zur Basisfläche unter 45° geneigten Lichteintrittsfläche (44d), wobei die Basisfläche (44a) senkrecht zur optischen Achse (21) der Aufpickanordnung (20) orientiert ist und die Streuschicht (44b) der Aufpickanordnung (20) zugewandt ist, und wobei der Körper so dimensioniert ist, dass in im Strahlengang befindlichem Zustand das von der Beleuchtungsanordnung kommende Licht im wesentlichen senkrecht durch die mindestens eine Lichteintrittsfläche (44d) in den Körper eintritt und von der Basisfläche (44a) in die Streuschicht (44b) reflektiert wird.

2. Messkopf nach Anspruch 1, **dadurch gekennzeichnet, dass** die Umlenkanordnung (44) aus Milchüberfangglas mit einer transparenten Grundschicht und einer damit homogen verbundenen Opalglasschicht gebildet ist, wobei die Streuschicht (44b) durch die Opalglasschicht des Milchüberfangglases gebildet ist.

3. Messkopf nach Anspruch 1, **dadurch gekennzeichnet, dass** die Umlenkanordnung (44) aus transparentem Kunststoff besteht, wobei die Streuschicht (44b) durch eine homogen verbundene Schicht aus einem streuenden zweiten Kunststoff oder durch eine streuende Oberflächenstrukturierung gebildet ist.

4. Messkopf nach einem der vorangehenden Ansprüche, **dadurch gekennzeichnet, dass** die Umlenkanordnung (44) zwei symmetrisch gegenüberliegende Lichteintrittsflächen (44d) aufweist, so dass von zwei gegenüberliegenden Lichtquellen stammendes Beleuchtungslicht in die Streuschicht (44b) gelenkt werden kann.

5. Messkopf nach einem der vorangehenden Ansprüche, **dadurch gekennzeichnet, dass** die Umlenkanordnung vier bis acht, insbesondere vier bis sechs Lichteintrittsflächen (44d) aufweist, so dass von mehreren Lichtquellen stammendes Beleuchtungslicht in die Streuschicht (44b) gelenkt werden kann.

6. Messkopf nach einem der vorangehenden Ansprüche, **dadurch gekennzeichnet, dass** die Beleuchtungsanordnung (10) eine linienförmige Anordnung von Leuchtdioden (11) umfasst, wobei viele einzelne Leuchtdioden-Chips eng gepackt längs einer schmalen, engdefinierten geraden, stückweise geraden oder gebogenen, speziell kreisförmigen Linie angeordnet und zumindest teilweise mit einem Harz vergossen sind, in welchem zumindest bereichsweise ein Konverter-Material zur Umwandlung des von den Leuchtdioden abgestrahlten Lichts in andere Wellenlängenbereiche enthalten ist.

**7.** Messkopf nach Anspruch 6, **dadurch gekennzeichnet, dass** die Beleuchtungsanordnung Leuchtdioden (11) mit unterschiedlichen spektralen Charakteristiken aufweist.

**8.** Messkopf nach einem der Ansprüche 6-7, **dadurch gekennzeichnet, dass** die Beleuchtungsanordnung (10) UV-Licht emittierende und nicht UV-Licht emittierende Bereiche aufweist, wobei das UV-Licht vorzugsweise zur Anregung von Aufhellern in Papier geeignet ist.

**9.** Messkopf nach einem der Ansprüche 6-8, **dadurch gekennzeichnet, dass** die Beleuchtungsanordnung (10) mit Farbfiltern (18) versehene Bereiche aufweist.

**10.** Messkopf nach einem der Ansprüche 6-9, **dadurch gekennzeichnet, dass** die Beleuchtungsanordnung (10) mit Polarisationsfiltern (18) versehene Bereiche aufweist.

**11.** Messkopf nach einem der Ansprüche 6-10, **dadurch gekennzeichnet, dass** die Beleuchtungsanordnung (10) Weiss emittierende Bereiche und schmalbandig emittierende Bereiche aufweist.

**12.** Messkopf nach einem der Ansprüche 6-11, **dadurch gekennzeichnet, dass** die Beleuchtungsanordnung (10) Bereiche mit schmalbandigen Konverter-Materialien aufweist.

**13.** Messkopf nach einem der Ansprüche 6-12, **dadurch gekennzeichnet, dass** die schmalbandig emittierenden Bereiche der Beleuchtungsanordnung (10) speziell für Farbdichtemessungen ausgelegt sind.

**14.** Messkopf nach einem der Ansprüche 6-13, **dadurch gekennzeichnet, dass** die Beleuchtungsanordnung (10) als Konverter-Materialien Ortho-Silikatleuchtstoffe (BOSE) enthält.

**15.** Messkopf nach einem der Ansprüche 6-14, **dadurch gekennzeichnet, dass** die Leuchtdioden (11) der Beleuchtungsanordnung (10) einzeln und/oder gruppenweise selektiv ansteuerbar sind.

**16.** Messkopf nach einem der vorangehenden Ansprüche, **dadurch gekennzeichnet, dass** er zur Bestimmung des absoluten Glanzes eines Messobjekts ausgebildet ist.

**17.** Messkopf nach Anspruch 16, **dadurch gekennzeichnet, dass** er einen Glanzmesskanal mit einem Fotoempfänger (50) aufweist, der vom Messobjekt unter im wesentlichen 45° reflektiertes Licht empfängt, und dass es dazu ausgebildet ist, den absoluten Glanz des Messobjekts rechnerisch aus den Messsignalen des Farbmesskanals (20,30) und den Messsignalen des Glanzmesskanals zu bestimmen.

**18.** Messkopf nach Anspruch 17, **dadurch gekennzeichnet, dass** die Umlenkanordnung (44) der Hellreferenzanordnung (40) zur Weisskalibrierung des Glanzkanals (50) ausgebildet ist.

**19.** Messkopf nach einem der Ansprüche 16-18, **dadurch gekennzeichnet, dass** er Mittel zur Klassifizierung eines Messobjekts nach dem gemessenen bzw. berechneten absoluten Glanz aufweist.

**20.** Messkopf nach einem der vorangehenden Ansprüche, **dadurch gekennzeichnet, dass** er Korrekturmittel aufweist, um die Messwerte in Abhängigkeit von verschiedenen Abständen und/oder Winkeln zum Messobjekt zu korrigieren.

**21.** Messkopf nach Anspruch 20, **dadurch gekennzeichnet, dass** die Korrekturmittel einen Satz von Weisskalibrationsdaten (C3) umfassen, die bei der Eichung oder während des Betriebs unter definierten und bekannten Bedingungen für eine Anzahl unterschiedlicher Abstände und Winkelpositionen zu einer Weissreferenz (WT) bestimmt wurden.

**22.** Messkopf nach Anspruch 21, **dadurch gekennzeichnet, dass** die Korrekturmittel für die Messwertberechnung aufgrund des bei der Messung vorliegenden Abstands und Winkels zum Messobjekt aus dem Satz von Weisskalibrationsdaten (C3) die dem vorliegenden Abstand und Winkel zugeordneten Weisskalibrationsdaten auswählen oder durch Inter/Extrapolation berechnen und für die Messwertberechnung verwenden.

**23.** Messkopf nach Anspruch 22, **dadurch gekennzeichnet, dass** die Korrekturmittel dazu ausgebildet sind, die Information über vorliegenden Abstand und Winkel zum Messobjekt über eine Kommunikationsschnittstelle mitgeteilt zu erhalten.

**24.** Messkopf nach Anspruch 22, **dadurch gekennzeichnet, dass** er Abstandsmessmittel zur Bestimmung des Abstands zum Messobjekt aufweist.

**25.** Messkopf nach Anspruch 24, **dadurch gekennzeichnet, dass** die Abstandsmessmittel einen zusätzlichen Messkanal mit einem eigenen Fotoempfänger (50) aufweisen.

**26.** Messkopf nach Anspruch 25, **dadurch gekennzeichnet, dass** die Abstandsmessmittel dazu ausgebildet sind, den Abstand zum Messobjekt aufgrund der Phasendifferenz der Messsignalverläufe des zusätzlichen Messkanals und des Farbmesskanals (20,30) zu bestimmen.

**27.** Messkopf nach Anspruch 26, **dadurch gekennzeichnet, dass** der zusätzliche Messkanal durch einen Glanzmesskanal gebildet ist.

**28.** Messkopf nach einem der vorangehenden Ansprüche, **dadurch gekennzeichnet, dass** er als Spektralmesskopf ausgebildet ist und mit einer einen Eintrittsspalt (31) aufweisenden Spektrometeranordnung (30) zur spektralen Aufspaltung des von der Aufpickanordnung (20) aufgefangenen und ihr durch den Eintrittsspalt zugeführten Messlichts ausgestattet ist.

**29.** Messkopf nach einem der vorangehenden Ansprüche, **dadurch gekennzeichnet, dass** die mindestens eine Lichtquelle (11) als Cosinus-Strahler ausgebildet und so angeordnet ist, dass ihre Strahlungskeule im wesentlichen senkrecht zur Messebene (M) steht und der Abstand der Lichtquelle von der optischen Achse (21) der Aufpickanordnung (20) im wesentlichen gleich gross ist wie der Abstand der Lichtquelle von der Messebene (M).

**30.** Farbmessgerät, insbesondere Spektralfotometer, mit einem Messkopf gemäss einem der vorangehenden Ansprüche und mit einer elektronischen Steuerung (100), welche die Beleuchtungsanordnung (10) steuert und aus den von der fotoelektrischen Empfängeranordnung (32) erzeugten elektrischen Signalen digitale Messwerte bildet.

**Claims**

**1.** Measurement head for a colour measurement device, comprising an illumination arrangement (10) with at least one light source (11) for illuminating a measurement object located in a measurement plane (M) at an angle of incidence of essentially 45°, comprising a pick-up arrangement (20) for capturing the measurement light remitted from the measurement object at an angle of reflection of essentially 0° relative to the perpendicular to the measurement plane, comprising a photoelectric receiver arrangement (32) for converting the measurement light captured by the pick-up arrangement into corresponding electrical signals, and comprising a brightness reference arrangement (40) which is provided with a redirecting arrangement (44) that can be inserted into and removed from the beam path between the illumination arrangement (10) and the pick-up arrangement (20) and that is located at a relatively large distance from the measurement plane (M), which redirecting arrangement, in the state located in the beam path, redirects at least part of the illumination light into the pick-up arrangement (20), **characterised in that** the redirecting arrangement (44) is designed as a prismatic or frusto-pyramidal or frusto-conical body which is essentially transparent and comprises a reflective flat base surface (44a), a scattering layer (44b) parallel thereto and at least one lateral light entry surface (44d) which is inclined at 45° relative to the base surface, wherein the base surface (44) is oriented perpendicular to the optical axis (21) of the pick-up arrangement (20) and the scattering layer (44b) faces towards the pick-up arrangement (20), and wherein the body is dimensioned in such a way that, in the state located in the beam path, the light coming from the illumination arrangement enters the body essentially perpendicularly through the at least one light entry surface (44d) and is reflected by the base surface (44a) into the scattering layer (44b).

**2.** Measurement head according to claim 1, **characterised in that** the redirecting arrangement (44) is formed of a white flashed glass with a transparent base layer and an opal glass layer homogeneously connected thereto, wherein the scattering layer (44b) is formed by the opal glass layer of the white flashed glass.

**3.** Measurement head according to claim 1, **characterised in that** the redirecting arrangement (44) is made from transparent plastic, wherein the scattering layer (44b) is formed by a homogeneously connected layer of a scattering second plastic or by a scattering surface structure.

4. Measurement head according to one of the preceding claims, **characterised in that** the redirecting arrangement (44) has two light entry surfaces (44d) arranged symmetrically opposite one another, so that illumination light coming from two light sources arranged opposite one another can be directed into the scattering layer (44b).

5. Measurement head according to one of the preceding claims, **characterised in that** the redirecting arrangement has four to eight, in particular four to six light entry surfaces (44d), so that illumination light coming from a plurality of light sources can be directed into the scattering layer (44b).

6. Measurement head according to one of the preceding claims, **characterised in that** the illumination arrangement (10) comprises a linear arrangement of light-emitting diodes (11), wherein a large number of individual light-emitting diode chips are arranged in a tightly packed manner along a small, narrowly defined straight, partially straight or curved, especially circular, line and are at least partially cast with a resin in which there is contained at least in some regions a converter material for converting the light emitted by the light-emitting diodes into other wavelength ranges.

7. Measurement head according to claim 6, **characterised in that** the illumination arrangement comprises light-emitting diodes (11) with different spectral characteristics.

8. Measurement head according to one of claims 6-7, **characterised in that** the illumination arrangement (10) comprises UV light-emitting and non-UV light-emitting regions, wherein the UV light is preferably suitable for exciting brighteners in paper.

9. Measurement head according to one of claims 6-8, **characterised in that** the illumination arrangement (10) comprises regions provided with colour filters (18).

10. Measurement head according to one of claims 6-9, **characterised in that** the illumination arrangement (10) comprises regions provided with polarisation filters (18).

11. Measurement head according to one of claims 6-10, **characterised in that** the illumination arrangement (10) comprises white-emitting regions and narrowband-emitting regions.

12. Measurement head according to one of claims 6-11, **characterised in that** the illumination arrangement (10) comprises regions containing narrowband converter materials.

13. Measurement head according to one of claims 6-12, **characterised in that** the narrowband-emitting regions of the illumination arrangement (10) are designed especially for colour density measurements.

14. Measurement head according to one of claims 6-13, **characterised in that** the illumination arrangement (10) contains orthosilicate illuminants (BOSE) as converter materials.

15. Measurement head according to one of claims 6-14, **characterised in that** the light-emitting diodes (11) of the illumination arrangement (10) can be selectively controlled individually and/or in groups.

16. Measurement head according to one of the preceding claims, **characterised in that** it is designed to determine the absolute gloss of a measurement object.

17. Measurement head according to claim 16, **characterised in that** it comprises a gloss measurement channel with a photoreceiver (50) which receives light reflected by the measurement object at essentially 45°, and **in that** it is designed to determine the absolute gloss of the measurement object by calculation from the measurement signals of the colour measurement channel (20, 30) and the measurement signals of the gloss measurement channel.

18. Measurement head according to claim 17, **characterised in that** the redirecting arrangement (44) of the brightness reference arrangement (40) is designed for the white calibration of the gloss channel (50).

19. Measurement head according to one of claims 16-18, **characterised in that** it comprises means for classifying a measurement object according to the measured or calculated absolute gloss.

20. Measurement head according to one of the preceding claims, **characterised in that** it comprises correction means for correcting the measured values as a function of different distances and/or angles relative to the measurement object.

21. Measurement head according to claim 20, **characterised in that** the correction means comprise a set of white calibration data (C3) which were determined during the standardisation or during operation under defined and known conditions for a number of different distances and angular positions relative to a white reference (WT).

22. Measurement head according to claim 21, **characterised in that**, for the measured value calculation based on the actual distance and angle relative to the measurement object during the measurement, the correction means select from the set of white calibration data (C3) or calculate by means of inter/extrapolation the white calibration data associated with the actual distance and angle and use these for the measured value calculation.

23. Measurement head according to claim 22, **characterised in that** the correction means are designed to receive the information concerning the actual distance and angle relative to the measurement object via a communication interface.

24. Measurement head according to claim 22, **characterised in that** it comprises distance measurement means for determining the distance from the measurement object.

25. Measurement head according to claim 24, **characterised in that** the distance measurement means comprise an additional measurement channel with a dedicated photoreceiver (50).

26. Measurement head according to claim 25, **characterised in that** the distance measurement means are designed to determine the distance from the measurement object based on the phase difference between the measurement signal curves of the additional measurement channel and of the colour measurement channel (20, 30).

27. Measurement head according to claim 26, **characterised in that** the additional measurement channel is formed by a gloss measurement channel.

28. Measurement head according to one of the preceding claims, **characterised in that** it is designed as a spectral measurement head and is equipped with a spectrometer arrangement (30), having an entry slot (31), for the spectral splitting of the measurement light captured by the pick-up arrangement (20) and fed in through the entry slot.

29. Measurement head according to one of the preceding claims, **characterised in that** the at least one light source (11) is designed as a cosine emitter and is arranged in such a way that its radiation lobe is essentially perpendicular to the measurement plane (M) and the distance of the light source from the optical axis (21) of the pick-up arrangement (20) is essentially the same as the distance of the light source from the measurement plane (M).

30. Colour measurement device, in particular a spectral photometer, comprising a measurement head according to one of the preceding claims and comprising an electronic control unit (100) which controls the illumination arrangement (10) and forms digital measured values from the electrical signals produced by the photoelectric receiver arrangement (32).

**Revendications**

1. Tête de mesure pour un colorimètre, avec un système d'éclairage (10) présentant au moins une source lumineuse (11) pour éclairer un objet de mesure situé dans un plan de mesure (M) sous un angle d'incidence d'essentiellement 45°, avec un système de capture (2) pour capter la lumière de mesure renvoyée par l'objet de mesure sous un angle de sortie d'essentiellement 0° par rapport à la normale au plan de mesure, avec un système récepteur photoélectrique (32) pour transformer la lumière de mesure captée par le système de capture en des signaux électriques correspondants et avec un système de référence claire (40) qui est muni d'un système de déviation (44) situé à relativement grande distance du plan de mesure (M) et pouvant être inséré dans, puis retiré du chemin de rayon entre le système d'éclairage (10) et le système de capture (20), système de déviation qui, quand il est placé sur le chemin de rayon, dévie au moins une partie de la lumière d'éclairage vers le système de capture (20), **caractérisée en ce que** le système de déviation (44) est conformé en corps prismatique ou en forme de pyramide tronquée ou de cône tronqué, essentiellement transparent, avec une surface de base (44a) plane réfléchissante, une couche de diffusion (44b) parallèle à celle-ci et au moins une surface latérale d'entrée de lumière (44d) inclinée à 45° par rapport à la surface de base, la surface de base (44a) étant orientée perpendiculairement à l'axe optique (21) du système de capture (20) et la couche de diffusion (44b) étant tournée vers le système de capture (20), et le corps de base étant dimensionné de telle manière que, dans l'état situé sur le chemin de rayon, la lumière venant du système d'éclairage pénètre dans le corps pour l'essentiel perpendiculairement par la surface d'entrée de lumière (44d) au nombre d'au moins un et est réfléchie dans la couche de diffusion (44b) par la surface de base (44a).

**2.** Tête de mesure selon la revendication 1, **caractérisée en ce que** le système de déviation (44) est formé d'un verre doublé opale avec une couche de base transparente et une couche de verre opale reliée à celle-ci de façon homogène, la couche de diffusion (44b) étant formée par la couche de verre opale du verre doublé opale.

**3.** Tête de mesure selon la revendication 1, **caractérisée en ce que** le système de déviation (44) est constitué d'une matière plastique transparente, la couche de diffusion (44b) étant formée par une couche reliée de façon homogène et constituée d'une deuxième matière plastique diffusante, ou par une texture de surface diffusante.

**4.** Tête de mesure selon l'une des revendications précédentes, **caractérisée en ce que** le système de déviation (44) présente deux surfaces d'entrée de lumière (44d) symétriquement opposées, de sorte que la lumière d'éclairage provenant de deux sources lumineuses opposées peut être envoyée dans la couche de diffusion (44b).

**5.** Tête de mesure selon l'une des revendications précédentes, **caractérisée en ce que** le système de déviation présente de quatre à huit, en particulier de quatre à six surfaces d'entrée de lumière (44d), de sorte que la lumière d'éclairage provenant de plusieurs sources lumineuses peut être envoyée dans la couche de diffusion (44b).

**6.** Tête de mesure selon l'une des revendications précédentes, **caractérisée en ce que** le système d'éclairage (10) comprend un agencement en ligne de diodes lumineuses (11), de nombreuses puces à diode lumineuse individuelles étant disposées de manière étroitement serrée le long d'une étroite ligne précisément définie, droite ou courbe par segments, en particulier circulaire et étant enrobées au moins partiellement dans une résine dans laquelle est contenu au moins par endroits un matériau convertisseur destiné à transformer la lumière émise par les diodes lumineuses vers d'autres plages de longueur d'onde.

**7.** Tête de mesure selon la revendication 6, **caractérisée en ce que** le système d'éclairage présente des diodes lumineuses (11) présentant différentes caractéristiques spectrales.

**8.** Tête de mesure selon l'une des revendications 6-7, **caractérisée en ce que** le système d'éclairage (10) présente des zones émettrices de lumière UV et des plages non émettrices de lumière UV, la lumière UV convenant de préférence pour exciter des azurants dans le papier.

**9.** Tête de mesure selon l'une des revendications 6-8, **caractérisée en ce que** le système d'éclairage (10) présente des zones munies de filtres colorés (18).

**10.** Tête de mesure selon l'une des revendications 6-9, **caractérisée en ce que** le système d'éclairage (10) présente des zones munies de filtres polarisants (18).

**11.** Tête de mesure selon l'une des revendications 6-10, **caractérisée en ce que** le système d'éclairage (10) présente des zones émettant du blanc et des zones émettant dans une bande étroite.

**12.** Tête de mesure selon l'une des revendications 6-11, **caractérisée en ce que** le système d'éclairage (10) présente des zones avec des matériaux convertisseurs à bande étroite.

**13.** Tête de mesure selon l'une des revendications 6-12, **caractérisée en ce que** les zones du système d'éclairage (10) émettant dans une bande étroite sont conçues spécialement pour des mesures de densité de couleur.

**14.** Tête de mesure selon l'une des revendications 6-13, **caractérisée en ce que** le système d'éclairage (10) contient comme matériaux convertisseurs des matériaux luminescents à base d'orthosilicates (BOSE).

**15.** Tête de mesure selon l'une des revendications 6-14, **caractérisée en ce que** les diodes lumineuses (11) du système d'éclairage (10) peuvent être commandées sélectivement de manière individuelle ou par groupes.

**16.** Tête de mesure selon l'une des revendications précédentes, **caractérisée en ce qu'**elle est conformée pour mesurer la brillance absolue d'un objet de mesure.

**17.** Tête de mesure selon la revendication 16, **caractérisée en ce qu'**elle présente un canal de mesure de brillance avec un photorécepteur (50) qui reçoit la lumière réfléchie par l'objet de mesure sous un angle d'essentiellement 45°, et **en ce qu'**elle est conformée pour déterminer la brillance absolue de l'objet de mesure par calcul à partir des signaux de mesure du canal de mesure de couleur (20, 30) et des signaux de mesure du canal de mesure de brillance.

**18.** Tête de mesure selon la revendication 17, **caractérisée en ce que** le système de déviation (44) du système de référence claire (40) est conformé pour le calibrage du blanc du canal de brillance (50).

**19.** Tête de mesure selon l'une des revendications 16-18, **caractérisée en ce qu'**elle présente des moyens de classification d'un objet de mesure selon la brillance absolue mesurée ou calculée.

**20.** Tête de mesure selon l'une des revendications précédentes, **caractérisée en ce qu'**elle présente des moyens de correction, afin de corriger les valeurs de mesure en fonction de différentes distances et/ou angles par rapport à l'objet de mesure.

**21.** Tête de mesure selon la revendication 20, **caractérisée en ce que** les moyens de correction comprennent un jeu de données de calibrage du blanc (C3) qui, lors du calibrage ou pendant l'utilisation dans des conditions définies et connues, ont été déterminées pour une pluralité de distances et de positions angulaires différentes par rapport à une référence blanche (WT).

**22.** Tête de mesure selon la revendication 21, **caractérisée en ce que**, pour le calcul de la valeur de mesure sur la base de la distance et de l'angle lors de la mesure à partir du jeu de données de calibrage du blanc (C3), les moyens de correction sélectionnent les données de calibrage du blanc associées à la distance et à l'angle en vigueur ou les calculent par interpolation/extrapolation et les utilisent pour calculer la valeur de mesure.

**23.** Tête de mesure selon la revendication 22, **caractérisée en ce que** les moyens de correction sont conformés de manière à être informés de l'information relative à la distance et à l'angle en vigueur par rapport à l'objet de mesure par l'intermédiaire d'une interface de communication.

**24.** Tête de mesure selon la revendication 22, **caractérisée en ce qu'**elle présente des moyens de mesure de distance pour déterminer la distance depuis l'objet de mesure.

**25.** Tête de mesure selon la revendication 24, **caractérisée en ce que** les moyens de mesure de distance présentent un canal de mesure supplémentaire ayant son propre photorécepteur (50).

**26.** Tête de mesure selon la revendication 25, **caractérisée en ce que** les moyens de mesure de distance sont conformés de façon à déterminer la distance par rapport à l'objet de mesure à partir de la différence de phase entre les courbes des signaux de mesure du canal de mesure supplémentaire et du canal de mesure de couleur (20, 30).

**27.** Tête de mesure selon la revendication 26, **caractérisée en ce que** le canal de mesure supplémentaire est formé par un canal de mesure de brillance.

**28.** Tête de mesure selon l'une des revendications précédentes, **caractérisée en ce qu'**elle est conformée en tête de mesure spectrale et elle est munie d'un système de spectromètre (30) présentant une fente d'entrée (31) pour la division spectrale de la lumière de mesure captée par le système de capture (20) et envoyée à lui à travers la fente d'entrée.

**29.** Tête de mesure selon l'une des revendications précédentes, **caractérisée en ce que** la source de lumière (11) au nombre d'au moins un est conformé en élément rayonnant cosinusoïdal et est disposé de telle manière que son lobe de rayonnement est pour l'essentiel perpendiculaire au plan de mesure (M) et la distance de la source lumineuse depuis l'axe optique (21) du système de capture (20) est sensiblement égale à la distance de la source lumineuse depuis le plan de mesure (M).

**30.** Colorimètre, en particulier spectrophotomètre, avec une tête de mesure selon l'une des revendications précédentes et avec une commande électronique (100) qui commande le système d'éclairage (10) et forme des valeurs de mesure numériques à partir des signaux électriques produits par les systèmes récepteurs photoélectriques (32).

**Fig. 1**

**Fig. 3b**

**Fig. 3a**

40

44

21

41

43

42

1

**Fig. 2b**

40

44

41

21

43

42

1

**Fig. 2a**

20

44

44b    44c

44d    44d

44a

**Fig. 4**

20    10

M    11

**Fig. 5a**

20    10

44    11

M

**Fig. 5b**

20    10

11a    11b

11d    11c

M

**Fig. 6a**

20    10

11a    11b

11d    11c

44    M

**Fig. 6b**

**Fig. 7**

20

12

10

M

44

**Fig. 8**

11

IX

IX

13

15

12

10

14

**Fig. 9**

17

16

14

13

15

12

11

13a

**Fig. 10**

**Fig. 11**

**Fig. 12**

**Fig. 13**

30

**Fig. 14**

11

20

50

1b

44

M

**Fig. 15**

30

11

20

50

1b

44b

M

44

## Fig. 16a

MD
BR
WT
R

## Fig. 16b

MD
WT
R

## Fig. 16c

MD
WT
R

## Fig. 16d

MD
WT
R

## Fig. 17a

MD
BR
M

## Fig. 17b

MD
M

## Fig. 17c

MD
M

## Fig. 17d

MD
M

**Fig. 18**

Host (Computer, Printer, Messgerät Controller)

H

Kommandi >
Höhe Winkel >
< Messdaten

H1

C3

C

Sensor-
Controller
-
Memory
Schnittstellen

C1

Weiss-Daten
(Höhe, Winkel)

MD

M

Abstandsmessung

C4

Kalibrations
Daten
Eichung

C2

EP 1 694 049 B1

**Fig. 19a**

**Fig. 19b**

**Fig. 20a**

**Fig. 20b**

**Fig. 20c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1507134 A

- US 10894797 B